# EUROPÄISCHE PATENTSCHRIFT

(11) **EP 2 033 137 B1**
(45) Veröffentlichungstag und Bekanntmachung des Hinweises auf die Patenterteilung: **14.11.2018**
(21) Anmeldenummer: 07764625.5
(22) Anmeldetag: 12.06.2007
(51) Int. Cl.: G06K 7/10, G06Q 20/34, G06K 19/07, G07F 7/10, G06K 7/00

(54) **DATENTRÄGER UND VERFAHREN ZUR KONTAKTLOSEN KOMMUNIKATION ZWISCHEN DEM DATENTRÄGER UND EINEM LESEGERÄT**
DATA STORAGE MEDIUM AND METHOD FOR CONTACTLESS COMMUNICATION BETWEEN THE DATA STORAGE MEDIUM AND A READER
SUPPORT DE DONNEES ET PROCEDE POUR LA COMMUNICATION SANS CONTACT ENTRE LE SUPPORT DE DONNEES ET UN APPAREIL DE LECTURE

(30) Priorität: 12.06.2006 DE 102006027200
(43) Veröffentlichungstag der Anmeldung: 11.03.2009
(73) Patentinhaber: Giesecke+Devrient Mobile Security GmbH, 81677 München (DE)
(72) Erfinder: FINZENKELLER, Klaus, 85774 Unterföhring (DE); HARTEL, Karl, Eglof, 80689 München (DE); BRANDL, Denny, 85386 Eching (DE)
(86) Internationale Anmeldenummer: PCT/EP2007/005185
(87) Internationale Veröffentlichungsnummer: WO 2007/144149

(56) Entgegenhaltungen:
- EP-A- 1 450 299
- WO-A-2006/010943

## Beschreibung

Die vorliegende Erfindung betrifft ein Verfahren zur kontaktlosen Kommunikation von zumindest zwei auf einem gemeinsamen tragbaren Datenträger gespeicherten Applikationen mit einem Lesegerät und einen entsprechend eingerichteten Datenträger. Ein Datenträger im Sinne der Erfindung kann z.B. eine kontaktlos kommunizierende Chipkarte, ein kontaktlos kommunizierendes Label, ein kontaktlos kommunizierendes Ausweisdokument, ein zur kontaktlosen Kommunikation ausgestattetes Sicherheitsmodul SAM (secure application module) oder ein zur kontaktlosen Kommunikation ausgestattetes elektronisches Gerät, wie z.B. ein Mobilfunkendgerät mit einer NFC-Schnittstelle, sein.

Im Stand der Technik (z.B. Finkenzeller, Klaus: RFID-Handbuch, München, 2002) werden verschiedene kontaktlos kommunizierende Datenträger beschrieben, beispielsweise Chipkarten und RFID-Transponder (radio frequency identification transponder), z.B. nach dem Standard ISO/IEC 14443. Dabei handelt es sich um so genannte Proximity-Coupling-Chipkarten, die häufig im Anwendungsbereich "Ticketing" Verwendung finden, also beispielsweise als Fahrausweis im öffentlichen Nahverkehr. Die Energieversorgung des Datenträgers erfolgt dabei üblicherweise durch das magnetische Wechselfeld eines Lesegerätes. Die Reichweite eines solchen Datenträgers beträgt ca. 7 bis 15 cm. Die Erfindung ist aber nicht auf Transponder-Chipkarten mit diesen kurzen Reichweiten beschränkt, sondern kann auch im Zusammenhang mit anderen kontaktlos kommunizierenden Datenträgern mit anderen Reichweiten und / oder nach anderen Standards Verwendung finden. Prinzipiell sind auch Datenträger mit eigener Energiequelle einsetzbar.

Wird ein solcher Datenträger in das Ansprechfeld eines Lesegerätes gebracht, wodurch seine Energieversorgung einsetzt und er in einen betriebsbereiten Modus versetzt wird, kann er ein vom Lesegerät zyklisch ausgesendetes Suchsignal empfangen und mittels eines ersten Antwortsignals dem Lesegerät seine Kommunikationsbereitschaft anzeigen. Sobald das Lesegerät dieses Signal empfangen hat, startet es einen Selektionsprozess mit Hilfe eines so genannten Antikollisionsverfahrens, um gezielt einen Datenträger zur weiteren Kommunikation auszuwählen, auch wenn sich gleichzeitig eine Mehrzahl von kommunikationsbereiten Datenträgern im Ansprechfeld des Lesegeräts befinden. Es gibt jedoch auch Lesegeräte, die über proprietäre, nicht standardisierte Kommunikationsprotokolle kommunizieren und keine Antikollisionsverfahren unterstützen.

Die Auswahl eines Datenträgers erfolgt bei einem Antikollisionsverfahren anhand einer eindeutigen Identifikationsnummer des Datenträgers, beispielsweise eines UID (unique identifier), eines PUPI (pseudo-unique PICC identifier, PICC=proximity ICC, ICC=integrated circuit card) oder dergleichen. Für Datenträger gemäß ISO/IEC 14443 gilt weiterhin, dass ein zur Kommunikation ausgewählter Datenträger während der Kommunikation über eine vom Lesegerät dynamisch vergebene eindeutige Sitzungsnummer (Session-ID, CID) adressierbar ist. In diesem Zustand antwortet ein solcher Datenträger nicht mehr auf die vorerwähnten und weiterhin vom Lesegerät ausgesendeten Suchsignale. Auf diese Weise kann das Lesegerät weitere im Ansprechfeld befindliche Datenträger über ihre eindeutige Identifikationsnummer selektieren und auch diesen wiederum eindeutige Sitzungsnummern zuordnen. Nach ISO/IEC 14443 können bis zu 16 Datenträger auf diese Weise gleichzeitig zur Kommunikation ausgewählt und über dementsprechend 16 unterschiedliche Sitzungsnummern adressiert werden. Ein vom Lesegerät ausgesendetes und mittels der Sitzungsnummer adressiertes Kommando wird dann stets nur von dem Datenträger verarbeitet, dem diese Sitzungsnummer zugeordnet worden ist.

Weiterhin ist bekannt, dass sich auf einem tragbaren Datenträger mehrere Applikationen gleichzeitig befinden können und dass die dazugehörigen Applikationsprozesse nebenläufig ausgeführt werden können, wenn auf dem Datenträger ein Betriebssystem eingerichtet ist, das die dazu notwendigen Mechanismen zur Verfügung stellt. Nebenläufiges Ausführen von Prozessen bedeutet, dass diese quasi gleichzeitig ausgeführt werden, indem immer wieder zwischen verschiedenen Prozessen umgeschaltet wird. Ein Umschalten zwischen verschiedenen Prozessen bedeutet, dass diese Prozesse abwechselnd dem Prozessor zugeführt werden, um tatsächliche Rechenzeit zu erhalten. Ein Applikationsprozess bezeichnet eine sich in Ausführung befindliche Applikation. Im Rahmen dieser Erfindung werden im Folgenden sowohl eine Applikation als auch der ihr zugehörige Applikationsprozess stets als Applikation bezeichnet.

Es ist möglich, eine Mehrzahl von verschiedenen nebenläufigen Applikationen, beispielsweise über ihre Applikationsbezeichner AID (application identifier), über verschiedene logische Kanäle (logical channels) anzusprechen. Logische Kanäle machen es möglich, über eine einzige Schnittstelle parallel mehrere virtuelle Kanäle vorzugeben, indem die entsprechenden Kommunikationsprotokolle so ausgelegt sind, dass der adressierte logische Kanal mitkodiert wird. Auf diese Weise können somit parallel mehrere Applikationen auf dem Datenträger durch Angabe des jeweils zu benutzenden Kanals über den Applikationsbezeichner angesprochen werden.

Die heute gängigen Protokolle und die Kodierung der zu übertragenden Daten (APDU, application data unit, eine Datenübertragungsform, die auf einem Anweisung/Antwort-Schema basiert) erlauben bis zu vier logische Kanäle, die mittels zwei spezieller Bits kodiert sind. Jedoch enthalten die auf ein von außerhalb des Datenträgers erhaltenes Kommando erzeugten Antworten des Datenträgers keine Angaben mehr über den logischen Kanal. Dies hat zur Folge, dass externe Anwendungen, die mit einer Mehrzahl von nebenläufigen Applikationen auf einem Datenträger kommunizieren wollen, untereinander synchronisiert sein müssen, da eine externe Anwendung anhand der Antwort einer Applikation des Datenträgers nicht entscheiden kann, ob diese die von ihr erwartete Antwort ist oder für eine andere externe Anwendung bestimmt ist.

Die Verwaltung von logischen Kanälen ist für ein Betriebssystem des Datenträgers sehr aufwendig und benötigt eine große Menge an Speicher, umso mehr noch, wenn die Kommunikation unter gesicherten Bedingungen stattzufinden hat, also die zu einer Applikation gehörenden Daten verschlüsselt übertragen werden und allgemein gegen Ausspähen durch andere Applikationen geschützt werden.

Probleme treten auch in den Fällen auf, in denen mehrere, möglicherweise proprietäre Applikationen, die bisher jeweils als einzige Applikation auf einem eigenen Datenträger gespeichert waren, nun auf einem gemeinsamen, als Multiapplikationsdatenträger ausgebildeten Datenträger integriert werden sollen. Zu den oben erläuterten Schwierigkeiten in der parallelen Kommunikation kommt hinzu, dass Kollisionen in den Datenstrukturen stattfinden können, weil die verschiedenen Applikationen beispielsweise bisher verschiedene Inhalte auf verschiedenen Datenträgern mit identischen Dateibezeichnern FID (file identifier) bezeichnet haben, die nun auf dem gemeinsamen Datenträger nur noch eine Datei bezeichnen. Es kommt auch vor, dass Applikationen von verschiedenen Datenträgern zu integrieren sind, die verschiedenen Einschränkungen in den Kommunikationsparametern, wie beispielsweise der Blocklänge übertragbarer Blöcke, unterliegen.

EP1450299 A1 offenbart einen Datenträger zur kontaktlosen Kommunikation eines Lesegeräts mit drei auf einem tragbaren Datenträger befindlichen kommunikationsbereiten Applikationen (AP1 bis AP3) .

WO2006/010943 offenbart einen Verfahren gemäß den Oberbegriff der Ansprüche 1 und 23. Aufgabe der vorliegenden Erfindung ist es, ein Verfahren anzugeben, das die kontaktlose Kommunikation von einer Mehrzahl nicht aufeinander abgestimmter Applikationen eines tragbaren Datenträgers mit einem Lesegerät verbessert, sowie einen entsprechend eingerichteten Datenträger. Diese Aufgabe wird durch ein Verfahren und einen Datenträger mit den Merkmalen der unabhängigen Ansprüche 1 und 23 gelöst. In davon abhängigen Ansprüchen sind vorteilhafte Ausgestaltungen und Weiterbildungen angegeben.

Das vorliegende erfindungsgemäße Verfahren basiert auf dem Grundgedanken, dass für zumindest zwei auf einem tragbaren, kontaktlos kommunizierenden Datenträger befindliche Applikationen, die bereit sind, mit einem Lesegerät zu kommunizieren, ein erstes Kommunikationsbereitschaftssignal an das Lesegerät für eine erste der zumindest zwei Applikationen erzeugt wird, wobei das Signal eine erste Identifikationsnummer umfasst, die der ersten der zumindest zwei Applikationen zugeordnet ist und dem Lesegerät die Kommunikationsbereitschaft dieser ersten Applikation anzeigt, und ein zweites Kommunikationsbereitschaftssignal an das Lesegerät für eine zweite der zumindest zwei Applikationen erzeugt wird, wobei das zweite Signal eine von der ersten Identifikationsnummer verschiedene zweite Identifikationsnummer umfasst, die der zweiten Applikationen zugeordnet ist und dem Lesegerät die Kommunikationsbereitschaft dieser zweiten Applikation anzeigt. Diese Schritte werden von einer entsprechend eingerichteten Kommunikationseinrichtung auf dem Datenträger durchgeführt.

Die Identifikationsnummern übernehmen die Rolle, die im Stand der Technik der dem Datenträger zugeordneten Identifikationsnummer (UID, PUPI und dergleichen) zukommt. Somit kann das Lesegerät eine Applikation aus einer Mehrzahl von auf einem Datenträger befindlichen Applikationen gezielt und unabhängig vom Datenträger über die Identifikationsnummer ansprechen. Ein übliches Lesegerät hat dabei den Eindruck, mit unterschiedlichen Datenträgern zu kommunizieren.

In diesem Zusammenhang werden die Kommunikationsbereitschaftssignale jeweils für Gruppen von Applikationen erzeugt und dem Lesegerät die Kommunikationsbereitschaft jeder der entsprechenden Applikationen der jeweiligen Gruppe angezeigt. Dabei wird allen Applikationen in einer solchen Gruppe dieselbe Identifikationsnummer zugeordnet. Es ist möglich, jeder der Applikationen in einer Gruppe eine zusätzliche Auswahlinformation zuzuordnen, mittels welcher eine Unterscheidung der Applikationen innerhalb einer Gruppe ermöglicht wird. Auf diese Weise können die Applikationen in hierarchischer Weise gegliedert werden. Wenn im Folgenden von der Kommunikation einer Applikation mit einem Lesegerät gesprochen wird, bedeutet dies immer die über eine Kommunikationseinrichtung des Datenträgers verlaufende Kommunikation, wobei das Lesegerät gezielt diese Applikation anspricht und die an die Applikation gerichteten Daten über die Kommunikationseinrichtung des Datenträgers an diese Applikation weitergeleitet werden. Dies gilt insbesondere auch dann, wenn sich auf dem Datenträger noch weitere kommunikationsbereite Applikationen befinden, oder Applikationen, die bereits mit dem Lesegerät in Kommunikation stehen oder bereits durch das Lesegerät nach abgeschlossener Kommunikation suspendiert worden sind.

Die für die Applikationen erzeugten Signale des Datenträgers können z.B. periodisch ausgesendete Signale sein oder spezielle Antwortsignale auf vom Lesegerät ausgesendete Suchsignale. So kann das Lesegerät erkennen, welche kommunikationsbereiten Applikationen sich in seinem Ansprechfeld befinden, auch wenn diese auf einem gemeinsamen Datenträger gespeichert sind.

Eine vorhandene Umschaltfunktionalität des Datenträgers kann zwischen verschiedenen nebenläufig auf dem Datenträger ausgeführten Applikationen umschalten. Auf diese Weise können sich mehrere Applikationen quasi gleichzeitig mit dem Lesegerät in Kommunikation befinden, wobei das Umschalten zwischen diesen Applikationen deren parallele Kommunikation mit dem Lesegerät über die Kommunikationseinrichtung ermöglicht. Allerdings kann die Kommunikation, angepasst an die Fähigkeiten des Lesegeräts, anstatt parallel auch nacheinander stattfinden.

Die vorerwähnten Einschränkungen im Zusammenhang mit der Benutzung logischer Kanäle fallen weg. Es können mehr als vier Applikationen parallel mit dem Lesegerät kommunizieren. Die Kommunikationseinrichtung stellt sicher, dass alle Daten, die vom Lesegerät zum Datenträger gesendet werden, nur durch die angesprochene Applikation verarbeitet werden. Sie stellt insbesondere sicher, dass alle vom Datenträger zum Lesegerät ausgesendeten Daten so beschaffen sind, dass das Lesegerät sie eindeutig einer Applikation zuordnen kann.

Schließlich ergibt sich der Vorteil, dass eine Mehrzahl von Applikationen unabhängig voneinander und ohne aufeinander abgestimmt sein zu müssen, auf einem gemeinsamen Datenträger integriert werden können, da das Umschalten zwischen den Applikationen es erlaubt, dass jede der Applikationen über eigene Datenstrukturen, beispielsweise ein Dateisystem, und eigene Softwaremittel, wie beispielsweise nur von ihr genutzten Programmcode, verfügen kann. Kollisionen mit weiteren Applikationen bezüglich dieser Ressourcen sind somit ausgeschlossen.

Die Umschaltfunktionalität kann als Bestandteil des Betriebssystems ausgebildet sein. Die Umschaltung zwischen verschiedenen Applikationen kann z.B. durch Verzweigen erfolgen. Beim Verzweigen wird von einem so genannten Elternprozess, ein neuer Prozess, der Kindprozess, gestartet. Hierbei nutzen beide, Eltern- und Kindprozess, dieselben Systemressourcen, wie beispielsweise Arbeitsspeicher. Eine Umschaltung kann andererseits z.B. auch durch einen Kontextwechsel mittels eines Dispatchers erfolgen. Dabei erhält der jeweils aktuell dem Prozessor zugeordnete Prozess seinen eigenen Kontext, der beispielsweise Bereiche im Hauptspeicher und Systemvariablen umfasst.

Das Lesegerät wählt eine Applikation für die weitere Kommunikation mittels der der Applikation zugeordneten Identifikationsnummer aus. Auch die der Applikation gegebenenfalls zugeordnete zusätzliche Auswahlinformation kann von dem Lesegerät zur Auswahl herangezogen werden. Einer für die weitere Kommunikation ausgewählten Applikation wird dann vom Lesegerät dynamisch eine Sitzungsnummer zugeordnet. Über diese Sitzungsnummer kann die Applikation während der Kommunikation mit dem Lesegerät eindeutig adressiert werden. Beim Adressieren wird die Sitzungsnummer im Datenträger durch die Kommunikationseinrichtung mit der der Applikation zugeordneten Identifikationsnummer und gegebenenfalls der zusätzlichen Auswahlinformation so verknüpft, dass bei der Kommunikation immer die richtige Applikation angesprochen wird. Ist eine Applikation vom Lesegerät zur weiteren Kommunikation ausgewählt, so findet diese Kommunikation anschließend auch statt, ohne dass es weiterer Schritte bedarf. Eine vom Lesegerät zur weiteren Kommunikation ausgewählte Applikation befindet sich also dann in Kommunikation mit dem Lesegerät.

Verfahrensgemäß werden von dem Datenträger für eine oder mehrere auf dem Datenträger befindliche Applikationen, die vom Lesegerät noch nicht für die weitere Kommunikation ausgewählt worden sind, Kommunikationsbereitschaftssignale erzeugt, auch wenn bereits eine oder mehrere andere Applikationen vom Lesegerät für die weitere Kommunikation ausgewählt worden sind und die Kommunikation mit diesen anderen Applikationen noch nicht abgeschlossen ist. Dies ist vorzugsweise auch dann der Fall, nachdem bereits eine oder mehrere andere Applikationen vom Lesegerät nach abgeschlossener Kommunikation suspendiert worden sind. Eine weitere, von der Kommunikation mit dem Lesegerät losgelöste Aktivität der vom Lesegerät suspendierten Applikation auf dem Datenträger ist weiterhin möglich.

Während nach dem Stand der Technik ein in Kommunikation befindlicher Datenträger nicht auf Suchsignale antwortet und ein suspendierter Datenträger entweder erst aus dem Ansprechfeld des Lesegeräts entfernt werden muss, um durch erneutes Einbringen wieder kommunikationsbereit zu werden oder durch ein RESET-Signal des Lesegerätes zurückgesetzt wird, kann ein Lesegerät mit allen kommunikationsbereiten Applikationen des erfindungsgemäßen Datenträgers jederzeit Kontakt aufnehmen.

Die Kommunikationseinrichtung steuert die gesamte Kommunikation zwischen den Applikationen und dem Lesegerät und kennt stets den Kommunikationsstatus jeder Applikation: kommunikationsbereit oder zur weiteren Kommunikation vom Lesegerät ausgewählt und somit mit dem Lesegerät in Kommunikation oder vom Lesegerät nach abgeschlossener Kommunikation suspendiert.

Der Datenträger teilt dem Lesegerät vorzugsweise mittels Kollisionssignalen mit, dass noch kommunikationsbereite Applikationen, die noch nicht für eine weitere Kommunikation ausgewählt worden sind, im Ansprechfeld vorhanden sind. Diese Signale, die während der Ausführung des Kollisionsalgorithmus ausgesendet werden, können beispielsweise die Form von vorgetäuschten Kollisionen zwischen einer Mehrzahl von Applikationen annehmen. Das Lesegerät wird dann parallel zur Kommunikation mit anderen Applikationen und / oder nach Kommunikationsende Suchsignale aussenden, um mit den noch nicht zur Kommunikation ausgewählten Applikationen Kontakt aufzunehmen.

Vorzugsweise kann die Kommunikationseinrichtung des Datenträgers anhand der Antworten des Lesegeräts auf ausgesendete Kommunikationsbereitschaftssignale erkennen, ob das Lesegerät in der Lage ist, eine Kollision zwischen einer Mehrzahl von Applikationen aufzulösen. In diesem Zusammenhang kann auch ein Abbrechen der Kommunikation durch das Lesegerät in dem Fall, in dem sich mehr als ein Datenträger im Ansprechfeld des Lesegeräts befindet, als eine Antwort des Lesegeräts interpretiert werden. Erkennt der Datenträger beispielsweise, dass das Lesegerät immer nur eine Applikation in seinem Ansprechfeld bearbeiten kann, kann das Aussenden von weiteren Kommunikationsbereitschaftssignalen daran angepasst werden. Der Datenträger sendet danach ein Kommunikationsbereitschaftssignal für eine Applikation erst dann aus, wenn das Lesegerät die Kommunikation mit einer anderen Applikation abgeschlossen hat.

Vorzugsweise speichert das Verfahren mittels der Kommunikationseinrichtung in einem nichtflüchtigen Speicher Information darüber, welche der Applikationen zuletzt vom Lesegerät für die weitere Kommunikation ausgewählt worden ist. Damit kann bei erneuter Aktivierung des Datenträgers, beispielsweise nach einer Unterbrechung der Energiezufuhr, festgestellt werden, welche Applikation zuletzt mit dem Lesegerät kommuniziert hat, um dann zunächst für eine davon verschiedene Applikation ein Kommunikationsbereitschaftssignal zu erzeugen, um z.B. zu verhindern, dass immer dieselbe Applikation zuerst zum Zuge kommt und andere Applikationen möglicherweise lange Wartezeiten in Kauf nehmen müssen oder gar nicht erst zur Ausführung kommen.

Das Verfahren kann daher so gestaltet werden, dass das Lesegerät mit mehreren Applikationen parallel kommunizieren kann. Dabei werden die den Applikationen zugeordneten Identifikationsnummern vorzugsweise so gewählt, dass das Lesegerät sie wie Identifikationsnummern von unterschiedlichen Datenträgern interpretiert. Dann kann das erfindungsgemäße Verfahren problemlos mit Lesegeräten nach dem Stand der Technik durchgeführt werden.

Bei Lesegeräten, die MIFARE-Speicherkarten mit in Sektoren organisierten Speichern und Applikationen, die jeweils einem der Sektoren fest zugeordnet sind, zur Kommunikation erwarten, ist es möglich, die zusätzliche Auswahlinformation als Sektorinformation zu benutzen. Durch Verwendung der Sektorinformation wird eine virtuelle Sektorzuordnung der einzelnen Applikationen erzeugt, die derjenigen einer MIFARE-Speicherkarte entspricht. Auf diese Weise ist es möglich, mittels eines modernen Datenträgers eine MIFARE-Speicherkarte zu emulieren, indem ein Speicher des Datenträgers mittels der Sektorinformation gegenüber dem Lesegerät als sektorierter Speicher erscheint. Für das Lesegerät ist es vorzugsweise nicht erkennbar, ob eine echte MIFARE-Speicherkarte physikalisch vorliegt, oder ob es sich um eine erfindungsgemäße emulierte MIFARE-Speicherkarte handelt.

In jedem Sektor einer derartigen emulierten MIFARE-Karte wird genau eine Applikation gespeichert. Vorzugsweise ist jeder einzelne Sektor für ein darauf zugreifendes Lesegerät separat zugriffsgeschützt, gewöhnlich durch ein dem Sektor zugeordnetes Paar von Schlüsseln. Es können somit auch solche Applikationen auf einem Datenträger ausführbar gespeichert werden, die auf unterschiedlichen ursprünglichen MIFARE-Speicherkarten jeweils entsprechenden festen Sektoren zugeordnet waren. Vorzugsweise werden dann solche Applikationen zu Gruppen mit einer gemeinsamen Identifikationsnummer zusammengefasst, die ursprünglich unterschiedlichen festen Sektoren zugeordnet waren. Dementsprechend interpretiert das Lesegerät einen derart ausgebildeten Datenträger als eine Vielzahl von MIFARE-Speicherkarten, wobei jede dieser MIFARE-Speicherkarten genau eine Gruppe von Applikationen umfasst, die in paarweise verschiedenen Sektoren residieren. Auf diese Weise kann das Lesegerät über die Identifikationsnummer erst eine Gruppe von Applikationen auswählen, die z.B. den Applikationen einer einzigen ursprünglichen MIFARE-Speicherkarte entsprechen. Danach kann anhand der zusätzlichen Auswahlinformation in der Form der virtuellen Sektorzuordnung eine spezielle Applikation ausgewählt werden, die z.B. ursprünglich fest dem Sektor 1 zugeordnet war.

Der erfindungsgemäße Datenträger kann allgemein als kontaktlos kommunizierende Chipkarte, kontaktlos kommunizierendes Label oder kontaktlos kommunizierendes Ausweisdokument ausgebildet sein. Weiterhin ist es möglich, dass der Datenträger als Sicherheitsmodul SAM (secure application module) in einem Gerät, das zur kontaktlosen Datenübertragung eingerichtet ist, ausgebildet ist, wobei das Sicherheitsmodul über Softwaremittel verfügt, um mittels einer geeigneten Schnittstelle mit Hilfe des Geräts kontaktlos zu kommunizieren. Ein SAM ist ein sowohl mechanisch als auch softwaretechnisch abgesichertes Bauteil, das zur Aufbewahrung von geheimen Daten und zum Ausführen von Kryptoalgorithmen dient.

Weiterhin kann auch ein elektronisches Gerät, insbesondere ein Mobilfunkendgerät, mit einer Kontaktlosschnittstelle zur Kommunikation mit einem Lesegerät und mit einer Mehrzahl von zugriffsgeschützten Speicherbereichen auf unterschiedlichen Speichermedien des Geräts als erfindungsgemäßer Datenträger ausgestaltet sein. Dabei ist in jedem der Speicherbereiche eine Applikation gespeichert. Vorzugsweise sind die Speicherbereiche auf einer oder mehreren Speichermedien, insbesondere sicheren Chipkarten, ausgebildet, die in das Mobilfunkendgerät integriert sind. Dies können beispielsweise (U)SIM-Mobilfunkkarten, SD-Karten (sichere digitale Speicherkarten) oder EMV-Zahlungskarten sein. EMV bezeichnet dabei eine Spezifikation für Zahlungskarten und ist aus "Europay", "MasterCard" und "Visa" abgeleitet. Mittels des erfindungsgemäßen Verfahrens ist es dann möglich, dass das Lesegerät mit jeder der Applikationen auf den unterschiedlichen sicheren Chipkarten über die Kontaktlosschnittstelle des Mobilfunkendgeräts kommuniziert. Hierbei ist die Kontaktlosschnittstelle vorzugsweise als NFC-Schnittstelle ("Near Field Communication") ausgebildet. Auf diese Weise wird ein so genanntes "Secure-NFC" mit einem Gerät in der Rolle eines passiven Kommunikationspartners und mit mehreren darauf gespeicherten Applikationen möglich.

Nachfolgend wird die Erfindung anhand der begleitenden Zeichnungen beispielhaft erläutert. Darin zeigen:
- Figur 1: eine schematische Darstellung eines Datenträgers;
- Figur 2: ein Flussdiagramm eines Ablaufs eines ersten Beispiels eines Verfahrens;
- Figur 3: ein Flussdiagramm eines Ablaufs eines zweiten Beispiels eines Verfahrens; und
- Figur 4: eine schematische Darstellung einer zweiten Ausführungsform eines erfindungsgemäßen Datenträgers.

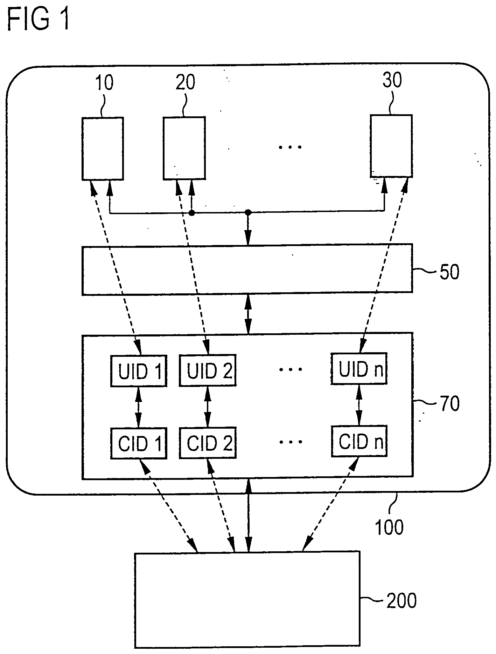

Verschiedene Beispiele werden im Folgenden genauer dargestellt. Figur 1 zeigt schematisch eine erste Ausführungsform eines erfindungsgemäßen Datenträgers 100 und ein Lesegerät 200. Auf dem Datenträger 100 befinden sich zumindest zwei Applikationen 10, 20, 30. Der Datenträger 100 umfasst eine Kommunikationseinrichtung 70 und eine Umschalteinrichtung 50, die eingerichtet ist, zwischen den verschiedenen Applikationen 10, 20, 30 umzuschalten. Jeder der Applikationen 10, 20, 30 ist eine Identifikationsnummer UID1, UID2, UIDn zugeordnet. Die Identifikationsnummern UID1, UID2, UIDn werden von der Kommunikationseinrichtung 70 verwaltet. Tritt das Lesegerät 200 in Kommunikation mit einer oder mehreren der Applikationen 10, 20, 30 des Datenträgers 100, so kann das Lesegerät diese über die Identifikationsnummern UID1, UID2, UIDn zur weiteren Kommunikation auswählen und mittels von ihm dynamisch vergebenen Sitzungsnummern CID1, CID2, CIDn im weiteren Verlauf der Kommunikation adressieren. Diese Sitzungsnummern CID1, CID2, CIDn können von der Kommunikationseinrichtung 70 mit den Identifikationsnummern der jeweils adressierten Applikationen verknüpft werden. Jegliche Kommunikation zwischen den Applikationen 10, 20, 30 des Datenträgers 100 mit dem Lesegerät 200 verläuft über die Kommunikationseinrichtung 70, wobei zwischen den Applikationen 10, 20, 30 mittels der Umschalteinrichtung 50 umgeschaltet werden kann.

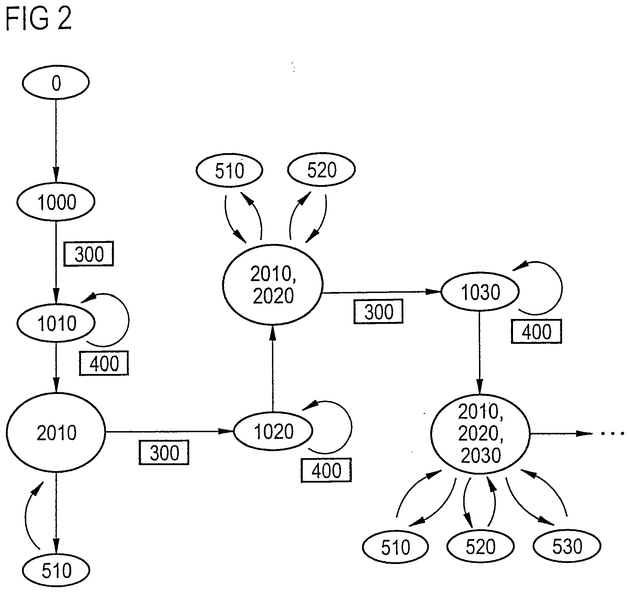

Figur 2 zeigt ein Flussdiagramm eines Ablaufs eines ersten Beispiels eines Verfahrens. Die Ziffern bezeichnen einzelne Verfahrensschritte und Zustände einzelner Komponenten. Gelangt der erfindungsgemäße Datenträger 100, der sich zu Beginn in nicht betriebsbereitem Zustand befindet 0, in das Ansprechfeld eines Lesegerätes 200, wird er betriebsbereit 1000 und empfängt vom Lesegerät 200 ein Suchsignal 300. Die Kommunikationseinrichtung 70 des Datenträgers 100 erzeugt für eine erste Applikation 10 ein Kommunikationsbereitschaftssignal, das die der Applikation 10 zugeordnete Identifikationsnummer UID1 umfasst 1010. Dieses Signal wird vom Datenträger ausgesendet, und die Applikation 10 wird im Laufe des Selektionsprozesses 400 mittels eines Antikollisionsverfahrens vom Lesegerät 200 für die weitere Kommunikation ausgewählt.

Während oder bevor das Lesegerät 200 mit der Applikation 10 des Datenträgers 100 kommuniziert 2010, welche sie über die Sitzungsnummer CID1 adressiert 510, sendet es weitere Suchsignale 300 aus und die Kommunikationseinrichtung 70 des Datenträgers 100 erzeugt für eine zweite Applikation 20 ein die Identifikationsnummer UID2 umfassendes Kommunikationsbereitschaftssignal 1020 und die Applikation 20 wird im Laufe des Selektionsprozesses 400 vom Lesegerät 200 für die weitere Kommunikation ausgewählt. Das Lesegerät 200 befindet sich nun parallel in Kommunikation mit den beiden Applikationen 10 und 20, 2010, 2020, die über die Sitzungsnummern CID1 510 bzw. CID2 adressiert werden 520.

Analog folgt die Kommunikationsaufnahme des Lesegeräts 200 mit der Applikation 30 durch ein Suchsignal 300, ein von der Kommunikationseinrichtung 70 erzeugtes Kommunikationsbereitschaftssignal 1030, einen Selektionsschritt 400, womit schließlich das Lesegerät 200 mit den drei über die Sitzungsnummern CID1, CID2, CIDn adressierten Applikationen 10, 20, 30, 510, 520, 530 parallel in Kommunikation ist 2010, 2020, 2030. Wie angedeutet, kann sich das Verfahren in gleicher Weise noch mit weiteren Applikationen fortsetzen.

Für das Lesegerät 200 erscheinen die verschiedenen Applikationen des Datenträgers 100 als eine Ansammlung verschiedener Datenträger nach dem Stand der Technik.

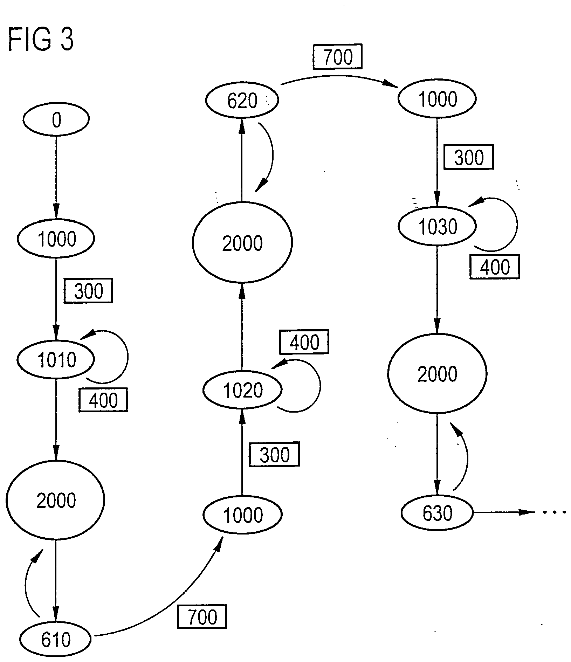

Figur 3 zeigt ein Flussdiagramm eines Ablaufs eines zweiten Beispiels eines Verfahrens. Die Ziffern bezeichnen wie in Figur 2 einzelne Verfahrensschritte und Zustände einzelner Komponenten. Hauptunterschied zu der in Figur 2 dargestellten Ausführungsform ist, dass im gegenwärtigen Beispiel das Lesegerät nicht mit mehreren Applikationen mittels verschiedene Sitzungsnummern gleichzeitig kommuniziert, sondern mit verschiedenen Applikationen nacheinander.

Schritte und Zustände, die gleich sind zu denen in Figur 2, werden gleich bezeichnet und nicht erneut erklärt. Nach Aussenden eines Suchsignals 300 durch das Lesegerät 200 erzeugt die Kommunikationseinrichtung 70 des Datenträgers 100 für eine erste Applikation 10 ein Kommunikationsbereitschaftssignal, das die der Applikation zugeordnete Identifikationsnummer UID1 1010 umfasst und die Applikation 10 wird im Laufe des Selektionsprozesses 400 mittels eines Antikollisionsverfahrens vom Lesegerät 200 für die weitere Kommunikation ausgewählt. Das Lesegerät 200 befindet sich in Kommunikation 2000 mit der Applikation 10, 610, und schließt diese Kommunikation auch ab, bevor es neue Suchsignale aussendet. Davor muss die Applikation 10 suspendiert werden 700, beispielsweise mittels eines DE-SELCT-Kommandos, wobei der Datenträger weiterhin betriebsbereit 1000 bleibt, und damit auf das nächste Suchsignal 300 des Lesegeräts 200 mit einem für eine zweite Applikation 20 erzeugten Kommunikationsbereitschaftssignal, welches die der Applikation 20 zugeordnete Identifikationsnummer UID2 umfasst, antworten kann. Ein analoger Prozess kann sich nun sequentiell für alle auf dem Datenträger befindlichen Applikationen anschließen. In Figur 3 ist noch die Kommunikation des Lesegerätes mit den Applikationen 20 und 30 dargestellt 620, 630.

Der Datenträger 100 ist vorzugsweise eingerichtet zu erkennen, ob das Lesegerät 200 in der Lage ist, mehrere in seinem Ansprechfeld befindliche kommunikationsbereite Applikationen zu behandeln und eventuell auftretende Kollisionen aufzulösen. Der Datenträger 100 wertet dazu z.B. die Antwort des Lesegeräts 200 auf parallel ausgesendete Kommunikationsbereitschaftssignale aus und erkennt dadurch die Fähigkeiten des Lesegeräts 200 zur Kollisionsbehandlung. Auch ein Abbrechen der Kommunikation durch das Lesegerät 200 kann als Antwort angesehen werden, wenn es sich beispielsweise um ein Lesegerät 200 handelt, welches prinzipiell nur einen Datenträger in seinem Ansprechfeld verarbeiten kann. Falls sich dann mehrere Datenträger in dem Ansprechfeld befinden, wird von Seiten des Lesegeräts sämtliche Kommunikation mit einem Datenträger abgebrochen. So kann der Datenträger 100 beispielsweise von einem Verfahren gemäß der ersten Ausführungsform zu einem Verfahren gemäß der zweiten Ausführungsform umschalten, wenn das Lesegerät 200 nicht in der Lage ist, Kollisionen aufzulösen.

Eine weitere Möglichkeit, dem Lesegerät 200 anzuzeigen, dass sich noch kommunikationsbereite Applikationen im Ansprechfeld befinden, besitzt der Datenträger 100 dadurch, dass die Kommunikationseinrichtung 70 während des Ablaufs eines Antikollisionsverfahrens 400 Signale aussenden kann, die dem Lesegerät 200 die Kollision von wenigstens zwei Datenträgern vortäuschen. Das Lesegerät 200 wird dann zu einem späteren Zeitpunkt versuchen, Kontakt zu solchen Applikationen aufzunehmen. Bei dem zum Vortäuschen einer Kollision ausgesendeten Signal oder Datenmuster kann es sich z.B. um eine Codeverletzung (z.B. ISO 14443 Typ A: Manchester Code bei gleichzeitigem Senden einer "0" und einer "1") oder um einen Prüfsummenfehler handeln. Bei Antikollisionsverfahren mit mehreren Zeitschlitzen (z.B. ISO 14443 Typ B: Slotted Aloha Verfahren) können in unterschiedlichen Zeitschlitzen die verschiedenen Identifikationsnummern UID1, UID2, UIDn der auf dem Datenträger befindlichen Applikationen 10, 20, 30 ausgesendet werden, um dem Lesegerät 200 die Anwesenheit entsprechender Datenträger vorzutäuschen.

Für das Lesegerät 200 besteht auch die Möglichkeit, das Magnetfeld kurzzeitig abzuschalten um dann, falls es sich um Datenträger ohne eigene Energieversorgung handelt, nach deren Neustart (Power-On Reset) einen neuen Datenträger im Ansprechfeld auszuwählen. Die Kommunikationseinrichtung 70 des Datenträgers 100 kann eingerichtet sein, in einem nichtflüchtigen Speicher des Datenträgers 100 Information darüber zu speichern, welche der Applikationen 10, 20, 30 zuletzt mit dem Lesegerät 200 kommuniziert hat, welche der Applikationen 10, 20, 30 eine aktive Kommunikation mit dem Lesegerät 200 bereits abgeschlossen hat und dergleichen.

Mit Hilfe einer solchen Information kann dann z.B. zunächst für eine Applikation 10, 20, 30 ein Kommunikationsbereitschaftssignal erzeugt werden, die nicht zuletzt mit dem Lesegerät 200 kommuniziert hat, um z.B. zu verhindern, dass immer dieselbe Applikation 10, 20, 30 zuerst zum Zuge kommt und andere Applikationen 10, 20, 30 möglicherweise lange Wartezeiten in Kauf nehmen müssen oder gar nicht erst zur Ausführung kommen. Es kann jedoch auch zunächst ein Kommunikationsbereitschaftssignal für diejenige Applikation 10, 20, 30 erzeugt werden, mit der das Lesegerät 200 zuletzt aktiv kommuniziert hat, um beispielsweise eine begonnene und noch nicht abgeschlossene Datenkommunikation zu Ende zu führen.

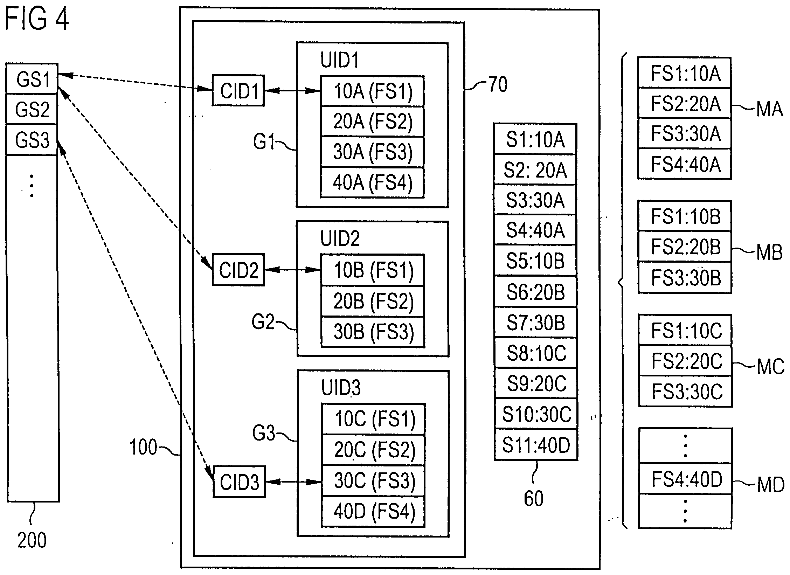

Figur 4 zeigt eine Ausführungsform eines erfindungsgemäßen Datenträgers 100, der eine oder mehrere MIFARE-Speicherkarten MA, MB, MC, MD emulieren kann. MIFARE-Speicherkarten MA-MD besitzen einen in die Sektoren FS1, FS2, FS3, FS4 unterteilten Speicher, wobei in jedem Sektor FS1-FS4 höchstens eine Applikation gespeichert ist. Jeder Sektor FS1-FS4 ist separat durch ein eigenes Schlüsselpaar gegen unerlaubte Zugriffe geschützt, d.h. nur ein Lesegerät 200, welches die entsprechenden Schlüssel eines Sektors FS1-FS4 besitzt, kann auf den entsprechenden Sektor FS1-FS4 und die darin gespeicherten Daten zugreifen. Es ist üblich, dass speziellen Applikationen auf MIFARE-Speicherkarten MA-MD feste Sektoren FS1-FS4 zugeordnet sind. Die Applikationen sind in Fig. 4 mit 10A-40A, 10B-30B, 10C-30C, 40D bezeichnet, wobei der jeweils nachgestellte Buchstabe A, B, C, D die ursprüngliche Speicherkarte MA, MB, MC, MD bezeichnet, von welcher die jeweilige Applikation 10A-40A, 10B-30B, 10C-30C, 40D auf den Datenträger 100 übertragen worden ist. So ist z.B. die Applikation 30B dem Sektor FS3 der Speicherkarte MB zugeordnet.

Ein Lesegerät 200, welches eine solche Karte MA-MD erwartet, wird dementsprechend nur denjenigen Sektor FS1-FS4 der Speicherkarte MA-MD auslesen, in dem es die entsprechende Applikation 10A-40A, 10B-30B, 10C-30C, 40D sucht. Ist eine Applikation 10A-40A, 10B-30B, 10C-30C, 40D zwar auf einer Karte MA-MD gespeichert, jedoch in einem anderen als dem von dem Lesegerät 200 vorgesehenen Sektor GS1, GS2, GS3, so kann diese Applikation 10A-40A, 10B-30B, 10C-30C, 40D von dem Lesegerät200 nicht gefunden werden. Um nun mehrere MIFARE-Speicherkarten MA-MD oder zumindest mehrere Applikationen 10A-40A, 10B-30B, 10C-30C, 40D von MIFARE-Speicherkarten MA-MD, die demselben festen Sektor FS1-FS4 zugeordnet sind, mittels eines Datenträgers 100 emulieren zu können, kann das erfindungsgemäße Verfahren in verschiedenen Varianten eingesetzt werden, die nachfolgend beschrieben werden.

Der Datenträger 100 umfasst dazu einen sektorierten Speicher 60, der prinzipiell wie ein Speicher einer MIFARE-Speicherkarte MA-MD aufgebaut ist. In jedem Sektor S1-S11 ist dabei höchstens eine der ursprünglichen MIFARE-Applikationen 10A-40A, 10B-30B, 10C-30C, 40D gespeichert. In einer effizienten ersten Variante, die in Figur 4 illustriert ist, wird nicht für jede Applikation 10A-40A, 10B-30B, 10C-30C, 40D notwendigerweise eine eigene Identifikationsnummer UID1-UID3 erzeugt. Es reicht vielmehr aus, wenn diejenigen Applikationen 10A-10C; 20A-20C; 30A-30C; 40A, 40D, die ursprünglich demselben festen Sektor FS1-FS4 zugeordnet waren, jeweils unterschiedliche Identifikationsnummern UID1-UID3 erhalten.

Die in den Sektoren S1-S11 des Datenträgers 100 gespeicherten Applikationen 10A-40A, 10B-30B, 10C-30C, 40D werden in Gruppen G1-G3 eingeteilt, die jeweils nur solche Applikationen 10A-40A; 10B-30B; 10C-30C, 40D enthalten, die ursprünglich paarweise verschiedenen festen Sektoren FS1-FS4 zugeordnet waren. Jeder dieser Gruppen G1-G3 wird eine eigene Identifikationsnummer UID1-UID3 zugeordnet und jeder Applikation 10A-40A, 10B-30B, 10C-30C, 40D innerhalb einer solchen Gruppe G1-G3 wird als zusätzliche Auswahlinformation der ursprünglich zugeordnete feste Sektor FS1-FS4 zugeordnet 10A(FS1)-40A(FS4), 10B(FS1)-30B(FS3), 10C(FS1)-30C(FS3), 40D(FS4). Diese derart zugeordnete Auswahlinformation erzeugt eine virtuelle Sektorzuordnung, die derjenigen einer emulierten MIFARE-Speicherkarte entspricht.

Die Kommunikationseinrichtung 70 erzeugt nun Kommunikationsbereitschaftssignale für diese Gruppen G1-G3 von Applikationen 10A-40A; 10B-30B; 10C-30C, 40D, wobei das Kommunikationsbereitschaftssignal eine Kommunikationsbereitschaft jeder einzelnen der Applikationen 10A-40A, 10B-30B, 10C-30C, 40D anzeigt. Das Lesegerät 200 kann über die Identifikationsnummer UID1-UID3 eine solche Gruppe G1-G3 von Applikationen 10A-40A; 10B-30B; 10C-30C, 40D zur Kommunikation auswählen. Die betreffende Gruppe erscheint dem Lesegerät 200 wie eine ursprüngliche MIFARE-Speicherkarte MA-MD. Über die zusätzliche Auswahlinformation FS1-FS4 kann das Lesegerät 200 dann aus der Gruppe G1-G3 die entsprechende Applikation 10A-40A, 10B-30B, 10C-30C, 40D auswählen, die derjenigen Sektorzuordnung GS1-GS3 entspricht, in der die gewünschte Applikation enthalten ist. Die Auswahlinformation FS1-FS4 in Form der virtuellen Sektorzuordnung erscheint dem Lesegerät 200 dabei wie eine feste Sektorzuordnung einer Applikation auf einer ursprünglichen MIFARE-Speicherkarte. Bei dieser Variante des Verfahrens zum Emulieren von MIFARE-Speicherkarten ist es für das Lesegerät 200 möglich, auf sämtliche auf dem Datenträger 100 gespeicherten Applikationen 10A-10C; 20A-20C; 30A-30C; 40A, 40D zuzugreifen, die ursprünglich demselben festen Sektor FS1-FS4 zugeordnet waren, unabhängig von deren tatsächlicher Sektorposition S1-S11 auf dem Datenträger 100.

In einer zweiten, einfacheren Variante (nicht dargestellt) wird jeder Applikation 10A-40A, 10B-30B, 10C-30C, 40D eine eigene Identifikationsnummer UID1-UID3 zugeordnet. Auf diese Weise erscheint der Datenträger 100 einem Lesegerät 200 wie eine Vielzahl von MIFARE-SpeicherkartenMA-MD, die alle jeweils nur eine Applikation 10A-40A, 10B-30B, 10C-30C, 40D enthalten. Die Information, welchem Sektor FS1-FS4 die jeweilige Applikation 10A-40A, 10B-30B, 10C-30C, 40D ursprünglich zugeordnet war, kann wiederum in der dieser Applikation 10A-40A, 10B-30B, 10C-30C, 40D zugeordneten zusätzlichen Auswahlinformation gespeichert werden.

Die Kommunikationseinrichtung 70 des Datenträgers 100 erzeugt somit Kommunikationsbereitschaftssignale für alle Applikationen 10A-40A, 10B-30B, 10C-30C, 40D mit jeweils unterschiedlichen Identifikationsnummern UID1-UID3. Das Lesegerät 200 kann dann eine Applikation 10A-40A, 10B-30B, 10C-30C, 40D über die entsprechende Identifikationsnummer UID1-UID3 auswählen und ausführen, sofern die in der zusätzlichen Auswahlinformation gespeicherte Sektorzuordnung FS1-FS4 mit der von dem Lesegerät 200 gewünschten Sektorzuordnung GS1-GS3 übereinstimmt. Das Lesegerät 200 kann auf diese Weise auf jede der auf dem Datenträger 100 gespeicherten Applikation 10A-40A, 10B-30B, 10C-30C, 40D separat zugreifen. Verschiedene Applikationen 10A-10C; 20A-20C; 30A-30C;40A, 40D, die ursprünglich demselben festen Sektor FS1-FS4 zugeordnet waren, sind nun alle für das Lesegerät 200 erreichbar, unabhängig von ihrer tatsächlichen Sektorposition S1-S11 auf dem Datenträger 100. Es ist jedoch möglich, dass das Lesegerät 200 eine große Anzahl von Applikationen 10-40A, 10B-30B, 10C-30C, 40D zur Kommunikation auswählt, die der vom Lesegerät 200 gewünschten Sektorzuordnung GS1-GS3 nicht entsprechen, da jeder Applikation 10A-40A, 10B-30B, 10C-30C, 40D eine eigene Identifikationsnummer UID1-UID3 zugeordnet worden ist. Auf diese Weise steigt jedoch der Gesamtkommunikationsaufwand zwischen dem Lesegerät 200 und den Applikationen 10A-40A, 10B-30B, 10C-30C, 40D auf dem Datenträger 100, weshalb im Allgemeinen das als erste Variante beschriebene Verfahren vorzuziehen ist, wenn ein effizienter Datenaustausch angestrebt wird.

In einer dritten Ausführungsform (nicht gezeigt) kann ein elektronisches Gerät, insbesondere ein Mobilfunkendgerät, als Datenträger 100 zur Kommunikation mit einem Lesegerät 200 ausgebildet sein. Das Mobilfunkendgerät umfasst dazu eine Kontaktlosschnittstelle, beispielsweise eine NFC-Schnittstelle. Zur Kommunikation mit dem Lesegerät 200 nimmt das Mobilfunkendgerät die Rolle des passiven Kommunikationspartners ("Slave") ein, während das Lesegerät 200 als aktiver Kommunikationspartner ("Master") agiert. Die auf dem Datenträger 100 vorliegenden Applikationen 10, 20,30 sind dabei jeweils in separaten Speicherbereichen des Datenträgers 100 gespeichert, vorzugsweise jeweils eine Applikation 10, 20, 30 pro Speicherbereich.

Die Speicherbereiche befinden sich auf mehreren, in dem Mobilfunkendgerät integrierten sicheren Chipkarten, z.B. (U)SIM-Mobilfunkkarten, SD-Karten, EMV-Zahlungskarten oder dergleichen. Dadurch sind die entsprechenden Applikationen 10, 20, 30 und die von diesen erzeugten Daten vor unbefugtem Zugriff geschützt. Die Kommunikationseinrichtung 70 des Mobilfunkendgeräts steuert die Kommunikation der Applikationen 10, 20, 30 auf den Chipkarten mit dem Lesegerät 200 über die Kontaktlosschnittstelle. Auf diese Weise wird ein so genanntes "Secure-NFC" zwischen einem Lesegerät 200 und mehreren auf einem Datenträger 100 sicher gespeicherten Applikationen 10, 20, 30 ermöglicht.

## Patentansprüche

1. Verfahren zur kontaktlosen Kommunikation eines Lesegeräts (200) mit zumindest zwei auf einem tragbaren Datenträger (100) befindlichen kommunikationsbereiten Applikationen (10, 20, 30), mit den Schritten:
Erzeugen eines ersten Kommunikationsbereitschaftssignals an das Lesegerät (200) für eine erste der zumindest zwei Applikationen (10, 20, 30), wobei das Kommunikationsbereitschaftssignal eine erste Identifikationsnummer (UID1) umfasst, die der ersten der zumindest zwei Applikationen (10, 20, 30) zugeordnet ist und dem Lesegerät (200) die Kommunikationsbereitschaft dieser ersten Applikation anzeigt, und
Erzeugen eines zweiten Kommunikationsbereitschaftssignals an das Lesegerät (200) für eine zweite der zumindest zwei Applikationen (10, 20, 30), wobei das zweite Kommunikationsbereitschaftssignal eine von der ersten Identifikationsnummer (UID1) verschiedene zweite Identifikationsnummer (UID2) umfasst, die dieser zweiten Applikation zugeordnet ist und dem Lesegerät (200) die Kommunikationsbereitschaft dieser zweiten Applikation anzeigt,
**dadurch gekennzeichnet, dass** das erste Kommunikationsbereitschaftssignal für eine die erste Applikation umfassende erste Gruppe (G1) von Applikationen (10A-40A) erzeugt wird und die erste Identifikationsnummer (UID1) jeder der Applikationen (10A-40A) in der ersten Gruppe (G1) zugeordnet ist und dass das zweite Kommunikationsbereitschaftssignal für eine die zweite Applikation umfassende zweite Gruppe (G2) von Applikationen (10B-30B) erzeugt wird und die zweite Identifikationsnummer (UID2) jeder der Applikationen (10B-30B) in der zweiten Gruppe (G2) zugeordnet ist, wobei das erste Kommunikationsbereitschaftssignal dem Lesegerät (200) die Kommunikationsbereitschaft jeder der Applikationen (10A-40A) der ersten Gruppe (G1) anzeigt und das zweite Kommunikationsbereitschaftssignal dem Lesegerät (200) die Kommunikationsbereitschaft jeder der Applikationen (10B-30B) der zweiten Gruppe (G2) anzeigt.

2. Verfahren gemäß Anspruch 1, **dadurch gekennzeichnet, dass** jeder der Applikationen (10A-40A) der ersten Gruppe (G1) und/oder jeder der Applikationen (10B-30B) der zweiten Gruppe (G2) jeweils eine zusätzliche Auswahlinformation zugeordnet wird.

3. Verfahren gemäß einem der Ansprüche 1 oder 2, **dadurch gekennzeichnet, dass** das Lesegerät (200) Suchsignale aussendet, wobei die für die Applikationen (10, 20, 30) erzeugten Signale Antwortsignale auf die Suchsignale sind.

4. Verfahren gemäß einem der Ansprüche 1 bis 3, **gekennzeichnet durch** den weiteren Schritt des Umschaltens zwischen den Applikationen (10, 20, 30) zur Kommunikation der Applikation (10, 20, 30) mit einem Lesegerät (200).

5. Verfahren gemäß Anspruch 4, **dadurch gekennzeichnet, dass** das Umschalten durch Verzweigen oder durch Kontextwechsel erfolgt.

6. Verfahren gemäß einem der Ansprüche 1 bis 5, **dadurch gekennzeichnet, dass** das Lesegerät (200) eine oder mehrere der zumindest zwei Applikationen (10, 20, 30) über die den Applikationen (10, 20, 30) zugeordneten Identifikationsnummern (UID1-UIDn) für die weitere Kommunikation auswählt.

7. Verfahren gemäß Anspruch 6 mit Anspruch 2, **dadurch gekennzeichnet, dass** das Lesegerät (200) eine oder mehrere der zumindest zwei Applikationen (10A-40A, 10B-30B, 10C-30C, 40D) über die den Applikationen (10A-40A, 10B-30B, 10C-30C, 40D) zugeordneten Identifikationsnummern (UID1-UID3) und über die den Applikationen (10A-40A, 10B-30B, 10C-30C, 40D) zugeordnete zusätzliche Auswahlinformation für die weitere Kommunikation auswählt.

8. Verfahren gemäß Anspruch 6 oder 7, **dadurch gekennzeichnet, dass** für eine oder mehrere der zumindest zwei Applikationen (10, 20, 30), die vom Lesegerät (200) noch nicht für die weitere Kommunikation ausgewählt worden sind, das Kommunikationsbereitschaftssignal erzeugt wird, während die Kommunikation mit einer oder mehreren anderen der zumindest zwei Applikationen (10, 20, 30), die vom Lesegerät (200) für die weitere Kommunikation ausgewählt worden sind, noch nicht abgeschlossen ist.

9. Verfahren gemäß einem der Ansprüche 6 bis 8, **dadurch gekennzeichnet, dass** für eine oder mehrere der zumindest zwei Applikationen (10, 20, 30), die vom Lesegerät (200) noch nicht für die weitere Kommunikation ausgewählt worden sind, das Kommunikationsbereitschaftssignal erzeugt wird, nachdem eine oder mehrere andere der zumindest zwei Applikationen (10, 20, 30) nach abgeschlossener Kommunikation mit dem Lesegerät (200) suspendiert worden sind.

10. Verfahren gemäß einem der Ansprüche 6 bis 9, **dadurch gekennzeichnet, dass** der Datenträger (100) dem Lesegerät (200) mittels Kollisionssignalen mitteilt, dass eine oder mehrere der zumindest zwei Applikationen (10, 20, 30), die vom Lesegerät (200) noch nicht für die weitere Kommunikation ausgewählt worden sind, vorhanden sind, indem Signale gesendet werden, die eine Kollisionen zwischen einer Mehrzahl von Applikationen (10, 20, 30) vortäuschen.

11. Verfahren gemäß einem der Ansprüche 6 bis 9, **dadurch gekennzeichnet, dass** der Datenträger (100) dem Lesegerät (200) mittels einer Belegung von ein oder mehreren Zeitschlitzen mitteilt, dass eine oder mehrere der zumindest zwei Applikationen (10, 20, 30), die vom Lesegerät (200) noch nicht für die weitere Kommunikation ausgewählt worden sind, vorhanden sind.

12. Verfahren gemäß einem der Ansprüche 6 bis 11, **gekennzeichnet durch** den weiteren Schritt des Speicherns von Information in einem nichtflüchtigen Speicher des Datenträgers (100) darüber, welche der zumindest zwei Applikationen (10, 20, 30) zuletzt von dem Lesegerät (200) für die weitere Kommunikation ausgewählt worden ist.

13. Verfahren gemäß einem der Ansprüche 6 bis 11, **gekennzeichnet durch** den weiteren Schritt des Speicherns von Information in einem nichtflüchtigen Speicher des Datenträgers (100) darüber, welche der zumindest zwei Applikationen (10, 20, 30) eine aktive Kommunikation mit dem Lesegerät (200) bereits abgeschlossen hat.

14. Verfahren gemäß Anspruch 12 oder 13, **dadurch gekennzeichnet, dass** bei erneuter Kommunikation des Lesegeräts (200) mit dem Datenträger (100) zunächst für eine der zumindest zwei Applikationen (10, 20, 30), die verschieden ist von der durch die gespeicherte Information bezeichneten Applikation (10, 20, 30), ein Kommunikationsbereitschaftssignal ausgesendet wird.

15. Verfahren gemäß Anspruch 12 oder 13, **dadurch gekennzeichnet, dass** bei erneuter Kommunikation des Lesegeräts (200) mit dem Datenträger (100) zunächst für die Applikation (10, 20, 30), mit der zuletzt aktiv kommuniziert wurde, ein Kommunikationsbereitschaftssignal ausgesendet wird.

16. Verfahren gemäß einem der Ansprüche 6 bis 15, **dadurch gekennzeichnet, dass** das Lesegerät (200) eine für die weitere Kommunikation ausgewählte Applikation (10, 20, 30) über eine dynamisch vergebene Sitzungsnummer (CID1-CIDn) adressiert.

17. Verfahren gemäß Anspruch 16, **dadurch gekennzeichnet, dass** beim Adressieren die Sitzungsnummer (CID1-CIDn) auf dem Datenträger (100) mit der der Applikation (10, 20, 30) zugeordneten Identifikationsnummer (UID1-UIDn) verknüpft wird.

18. Verfahren nach Anspruch 17 mit Anspruch 2, **dadurch gekennzeichnet, dass** beim Adressieren die Sitzungsnummer (CID1-CID3) auf dem Datenträger (100) zusätzlich mit der der Applikation (10A-40A, 10B-30B, 10C-30C, 40D) zugeordneten zusätzlichen Auswahlinformation verknüpft wird.

19. Verfahren gemäß einem der Ansprüche 1 bis 18, **dadurch gekennzeichnet, dass** der Datenträger (100) anhand einer Antwort des Lesegeräts (200) auf von dem Datenträger (100) ausgesendete Kommunikationsbereitschaftssignale erkennt, ob das Lesegerät (200) eingerichtet ist, eine Kollision zwischen einer Mehrzahl von Applikationen (10, 20, 30) aufzulösen.

20. Verfahren gemäß einem der Ansprüche 1 bis 19, **dadurch gekennzeichnet, dass** das Lesegerät (200) mit mehreren der zumindest zwei Applikationen (10, 20, 30) parallel kommuniziert.

21. Verfahren gemäß einem der Ansprüche 1 bis 20, **dadurch gekennzeichnet, dass** das Lesegerät (200) die Identifikationsnummern (UID1-UIDn) als Identifikationsnummern unterschiedlicher Datenträger interpretiert.

22. Verfahren gemäß Anspruch 21 mit Anspruch 2, **dadurch gekennzeichnet, dass** der Datenträger (100) die zusätzliche Auswahlinformation als virtuelle Sektorzuordnung (FS1-FS4) erzeugt und das Lesegerät (200) die zusätzliche Auswahlinformation als Sektorzuordnung (FS1-FS4) eines Speicherbereichs eines der unterschiedlichen Datenträger (MA-MD) interpretiert, wobei die unterschiedlichen Datenträger (MA-MD) emulierte Datenträger (MA-MD) sein können.

23. Kontaktlos kommunizierender tragbarer Datenträger (100), umfassend zumindest zwei darauf gespeicherte Applikationen (10, 20, 30) und eine Kommunikationseinrichtung (70) zum Steuern einer Kommunikation zwischen einem Lesegerät (200) und den zumindest zwei Applikationen (10, 20, 30), wobei die Kommunikationseinrichtung (70) eingerichtet ist, Kommunikationsbereitschaftssignale an das Lesegerät (200) zu erzeugen, die jeweils dem Lesegerät (200) eine Kommunikationsbereitschaft für eine der Applikationen (10, 20, 30) anzeigen und eine der entsprechenden kommunikationsbereiten Applikation (10, 20, 30) zugeordnete Identifikationsnummer umfassen,
**dadurch gekennzeichnet, dass** die Kommunikationseinrichtung (70) eingerichtet ist, Kommunikationsbereitschaftssignale an das Lesegerät (200) zu erzeugen, die jeweils dem Lesegerät eine Kommunikationsbereitschaft jeder Applikation (10A-40A; 10B-30B; 10C-30C, 40D) einer die eine Applikation umfassenden Gruppe (G1; G2; G3) von Applikationen (10A-40A; 10B-30B; 10C-30C, 40D) anzeigen und eine jeder der Applikationen (10A-40A; 10-30B; 10C-30C, 40D) der Gruppe (G1; G2; G3) zugeordnete Identifikationsnummer (UID1; UID2; UID3) umfassen.

24. Datenträger gemäß Anspruch 23, **dadurch gekennzeichnet, dass** die Kommunikationseinrichtung (70) eingerichtet ist, jeder der Applikationen (10A-40A; 10B-30B; 10C-30C, 40D) der Gruppe (G1; G2; G3) jeweils eine zusätzliche Auswahlinformation zuzuordnen.

25. Datenträger (100) gemäß einem der Ansprüche 22 bis 24, **dadurch gekennzeichnet, dass** die Kommunikationseinrichtung (70) eingerichtet ist, die Kommunikationsbereitschaftssignale als Antwortsignale auf von einem Lesegerät (200) empfangene Suchsignale zu erzeugen.

26. Datenträger (100) gemäß einem der Ansprüche 22 bis 25, **gekennzeichnet durch** eine Umschalteinrichtung (50), die eingerichtet ist, zur Kommunikation der Applikationen (10, 20, 30) mit einem Lesegerät (200) zwischen den Applikationen (10, 20, 30) des Datenträgers (100) umzuschalten.

27. Datenträger (100) gemäß Anspruch 26, **dadurch gekennzeichnet, dass** die Umschalteinrichtung (50) eingerichtet ist, zwischen den Applikationen (10, 20, 30) des Datenträgers (100) mittels Verzweigens oder Kontextwechsels umzuschalten.

28. Datenträger (100) gemäß einem der Ansprüche 22 bis 27, **dadurch gekennzeichnet, dass** die Kommunikationseinrichtung (70) eingerichtet ist, die Kommunikation zwischen einem Lesegerät (200) und einer von dem Lesegerät (200) über eine Sitzungsnummer (CID1-CIDn) adressierten Applikation (10, 20, 30) herzustellen.

29. Datenträger (100) gemäß Anspruch 28, **dadurch gekennzeichnet, dass** die Kommunikationseinrichtung (70) eingerichtet ist, beim Adressieren der Applikation (10, 20, 30) die Sitzungsnummer (CID1-CIDn) mit der der Applikation (10, 20, 30) zugeordneten Identifikationsnummer (UID1-UIDn) zu verknüpfen.

30. Datenträger (100) gemäß Anspruch 29 mit Anspruch 24, **dadurch gekennzeichnet, dass** die Kommunikationseinrichtung (70) eingerichtet ist, beim Adressieren der Applikation (10A-40A, 10B-30B, 10C-30C, 40D) die Sitzungsnummer (CID1-CID3) zusätzlich mit der der Applikation (10A-40A, 10B-30B, 10C-30C, 40D) zugeordneten zusätzlichen Auswahlinformation zu verknüpfen.

31. Datenträger (100) gemäß einem der Ansprüche 22 bis 30, **dadurch gekennzeichnet, dass** die Kommunikationseinrichtung (70) eingerichtet ist, diejenigen Applikationen (10, 20,30) aus den zumindest zwei Applikationen (10, 20, 30) zu ermitteln, die zur Kommunikation mit einem Lesegerät (200) bereit sind.

32. Datenträger (100) gemäß Anspruch 31, **dadurch gekennzeichnet, dass** die Kommunikationseinrichtung (70) eingerichtet ist, für eine oder mehrere der zumindest zwei Applikationen (10, 20, 30), die zur Kommunikation mit einem Lesegerät (200) bereit sind und noch nicht mit einem Lesegerät (200) kommunizieren, Kommunikationsbereitschaftssignale auszusenden, während die Kommunikation mit einer oder mehreren anderen der zumindest zwei Applikationen (10, 20, 30) noch nicht abgeschlossen ist.

33. Datenträger (100) gemäß Anspruch 31 oder 32, **dadurch gekennzeichnet, dass** die Kommunikationseinrichtung (70) eingerichtet ist, für eine oder mehrere der zumindest zwei Applikationen (10, 20, 30), die zur Kommunikation mit einem Lesegerät (200) bereit sind und noch nicht mit einem Lesegerät (200) kommunizieren, Kommunikationsbereitschaftssignale auszusenden, nachdem eine oder mehrere andere der zumindest zwei Applikationen (10, 20, 30) nach abgeschlossener Kommunikation mit einem Lesegerät (200) suspendiert worden sind.

34. Datenträger (100) gemäß einem der Ansprüche 22 bis 33, **dadurch gekennzeichnet, dass** die Kommunikationseinrichtung (70) eingerichtet ist, dem Lesegerät (200) über Kollisionssignale, die eine Kollision zwischen einer Mehrzahl von Applikationen vortäuschen, mitzuteilen, dass noch eine oder mehrere der zumindest zwei auf dem Datenträger (100) befindlichen Applikationen (10, 20, 30), die vom Lesegerät (200) noch nicht für die weitere Kommunikation ausgewählt worden sind, vorhanden sind.

35. Datenträger (100) gemäß einem der Ansprüche 22 bis 34, **dadurch gekennzeichnet, dass** die Kommunikationseinrichtung (70) eingerichtet ist, in einem nichtflüchtigen Speicher des Datenträgers (100) Informationen darüber zu speichern, welche der zumindest zwei Applikationen (10, 20, 30) zuletzt mit einem Lesegerät (200) kommuniziert hat.

36. Datenträger (100) gemäß Anspruch 35, **dadurch gekennzeichnet, dass** die Kommunikationseinrichtung (70) eingerichtet ist, bei erneuter Kontaktaufnahme eines Lesegeräts (200) zum Datenträger (100) zunächst für eine der zumindest zwei Applikationen (10, 20, 30), die verschieden ist von der durch die gespeicherte Information bezeichneten Applikation (10, 20, 30), ein Kommunikationsbereitschaftssignal auszusenden.

37. Datenträger (100) gemäß einem der Ansprüche 22 bis 36, **dadurch gekennzeichnet, dass** die Kommunikationseinrichtung (70) eingerichtet ist, anhand einer Antwort eines Lesegeräts (200) auf von der Kommunikationseinrichtung (70) ausgesendete Kommunikationsbereitschaftssignale zu erkennen, ob das Lesegerät (200) eingerichtet ist, Kollisionen zwischen einer Mehrzahl von Applikationen aufzulösen.

38. Datenträger (100) gemäß einem der Ansprüche 22 bis 37, **dadurch gekennzeichnet, dass** der Datenträger (100) als kontaktlos kommunizierende Chipkarte, kontaktlos kommunizierendes Label, kontaktlos kommunizierendes Ausweisdokument oder als eine (U)SIM-Mobilfunkkarte ausgebildet ist.

39. Datenträger (100) gemäß einem der Ansprüche 22 bis 38, **dadurch gekennzeichnet, dass** der Datenträger (100) ein Dual-Interface aufweist und sowohl kontaktlos als auch kontaktbehaftet betrieben werden kann.

40. Datenträger (100) gemäß einem der Ansprüche 22 bis 37, **dadurch gekennzeichnet, dass** der Datenträger (100) als Sicherheitsmodul in einem Gerät, das Kommunikationsmittel zur kontaktlosen Kommunikation umfasst, ausgebildet ist, wobei das Sicherheitsmodul über Softwaremittel verfügt, um über die Kommunikationsmittel des Geräts kontaktlos zu kommunizieren.

41. Datenträger (100) gemäß einem der Ansprüche 22 bis 40, **gekennzeichnet durch** einen Speicher (60), der in Sektoren (S1-S11) unterteilt ist, wobei in jedem der Sektoren (S1-S11) jeweils höchstens eine der zumindest zwei Applikationen (10A-40A, 10B-30B, 10C-30C, 40D) gespeichert ist.

42. Datenträger (100) gemäß Anspruch 41 mit Anspruch 24, **dadurch gekennzeichnet, dass** die Kommunikationseinrichtung (70) eingerichtet ist, den zumindest zwei Applikationen (10A-40A, 10B-30B, 10C-30C, 40D) die zusätzliche Auswahlinformation in der Form einer virtuellen Sektorzuordnung (FS1-FS4) zuzuordnen und Kommunikationsbereitschaftssignale für die Gruppen (G1; G2; G3) von Applikationen zu erzeugen, wobei die Gruppen (G1; G2; G3) jeweils Applikationen (10A-40A; 10B-30B; 10C-30C, 40D) mit paarweise unterschiedlichen virtuellen Sektorzuordnungen (FS1-FS4) umfassen.

43. Datenträger (100) gemäß Anspruch 41 oder 42, **dadurch gekennzeichnet, dass** jeder der Sektoren (S1-S11) für einen Zugriff auf darin gespeicherte Applikationen (10A-40A, 10B-30B, 10C-30C, 40D) durch ein Lesegerät (200) separat zugriffsgeschützt ist.

44. Datenträger (100) gemäß einem den Ansprüche 22 bis 37, **dadurch gekennzeichnet, dass** der Datenträger (100) als elektronisches Gerät, insbesondere als Mobilfunkendgerät, mit einer Kontaktlosschnittstelle zur Kommunikation mit einem Lesegerät (200) und mit einer Mehrzahl von Speichern ausgebildet ist, wobei in jedem der Speicher jeweils höchstens eine der zumindest zwei Applikationen (10, 20, 30) gespeichert ist.

45. Datenträger (100) nach Anspruch 44, **dadurch gekennzeichnet, dass** die Kontaktlosschnittstelle als NFC-Schnittstelle ausgebildet ist und der Datenträger (100) eingerichtet ist, zur Kommunikation mit einem Lesegerät (200) im passiven Modus betrieben zu werden.

46. Datenträger (100) nach Anspruch 44 oder 45, **dadurch gekennzeichnet, dass** die Speicher auf in den Datenträger (100) integrierten Chipkarten, insbesondere (U)SIM-Mobilfunkkarten, sicheren digitalen Speicherkarten oder EMV-Zahlungskarten, ausgebildet sind.

## Claims

1. A method for contactless communication of a reading device (200) with at least two communication-ready applications (10, 20, 30) located on a portable data carrier (100), having the steps of:
generating a first communication-ready signal to the reading device (200) for a first of the at least two applications (10, 20, 30), the communication-ready signal comprising a first identification number (UID1) which is assigned to the first of the at least two applications (10, 20, 30) and indicates to the reading device (200) the communication readiness of said first application, and
generating a second communication-ready signal to the reading device (200) for a second of the at least two applications (10, 20, 30), the second communication-ready signal comprising a second identification number (UID2) different from the first identification number (UID1), which is assigned to said second application and indicates to the reading device (200) the communication readiness of said second application,
**characterized in that** the first communication-ready signal is generated for a first group (G1) of applications (10A-40A) comprising the first application, and the first identification number (UID1) is assigned to each of the applications (10A-40A) in the first group (G1), and the second communication-ready signal is generated for a second group (G2) of applications (10B- 30B) comprising the second application, and the second identification number (UID2) is assigned to each of the applications (10B-30B) in the second group (G2), the first communication-ready signal indicating to the reading device (200) the communication readiness of each of the applications (10A-40A) of the first group (G1), and the second communication-ready signal indicating to the reading device (200) the communication readiness of each of the applications (10B-30B) of the second group (G2).

2. The method according to claim 1, **characterized in that** each of the applications (10A-40A) of the first group (G1) and/or each of the applications (10B-30B) of the second group (G2) is assigned additional selection information in each case.

3. The method according to any of claims 1 or 2, **characterized in that** the reading device (200) emits search signals, the signals generated for the applications (10, 20, 30) being response signals to the search signals.

4. The method according to any of claims 1 to 3, **characterized by** the further step of toggling between the applications (10, 20, 30) for communication of the application (10, 20, 30) with a reading device (200).

5. The method according to claim 4, **characterized in that** toggling is effected by branching or by context switching.

6. The method according to any of claims 1 to 5, **characterized in that** the reading device (200) selects for further communication one or more of the at least two applications (10, 20, 30) via the identification numbers (UID1-UIDn) assigned to the applications (10, 20, 30).

7. The method according to claim 6 with claim 2, **characterized in that** the reading device (200) selects for further communication one or more of the at least two applications (10A-40A, 10B-30B, 10C-30C, 40D) via the identification numbers (UID1-UID3) assigned to the applications (10A- 40A, 10B-30B, 10C-30C, 40D) and via the additional selection information assigned to the applications (10A-40A, 10B-30B, 10C-30C, 40D).

8. The method according to claim 6 or 7, **characterized in that** for one or more of the at least two applications (10, 20, 30) that have not yet been selected for further communication by the reading device (200), the communication-ready signal is generated while the communication with one or more others of the at least two applications (10, 20, 30) that have been selected for further communication by the reading device (200) is not yet completed.

9. The method according to any of claims 6 to 8, **characterized in that** for one or more of the at least two applications (10, 20, 30) that have not yet been selected for further communication by the reading device (200), the communication-ready signal is generated after one or more others of the at least two applications (10, 20, 30) have been suspended after completion of communication with the reading device (200).

10. The method according to any of claims 6 to 9, **characterized in that** the data carrier (100) informs the reading device (200) by means of collision signals that one or more of the at least two applications (10, 20, 30) that have not yet been selected for further communication by the reading device (200) are present by signals being sent that simulate a collision between a plurality of applications (10, 20, 30).

11. The method according to any of claims 6 to 9, **characterized in that** the data carrier (100) informs the reading device (200) by means of an occupation of one or more time slots that one or more of the at least two applications (10, 20, 30) that have not yet been selected for further communication by the reading device (200) are present.

12. The method according to any of claims 6 to 11, **characterized by** the further step of storing information in a nonvolatile memory of the data carrier (100) about which of the at least two applications (10, 20, 30) was last selected for further communication by the reading device (200).

13. The method according to any of claims 6 to 11, **characterized by** the further step of storing information in a nonvolatile memory of the data carrier (100) about which of the at least two applications (10, 20, 30) has already completed active communication with the reading device (200).

14. The method according to claim 12 or 13, **characterized in that** upon new communication of the reading device (200) with the data carrier (100), a communication-ready signal is emitted first for one of the at least two applications (10, 20, 30) that is different from the application (10, 20, 30) designated by the stored information.

15. The method according to claim 12 or 13, **characterized in that** upon new communication of the reading device (200) with the data carrier (100), a communication-ready signal is emitted first for the application (10, 20, 30) with which active communication was effected last.

16. The method according to any of claims 6 to 15, **characterized in that** the reading device (200) addresses an application (10, 20, 30) selected for further communication via a dynamically allocated session number (CID1-CIDn).

17. The method according to claim 16, **characterized in that** upon addressing, the session number (CID1-CIDn) on the data carrier (100) is linked with identification number (UID1-UIDn) of the associated application (10, 20, 30).

18. The method according to claim 17 with claim 2, **characterized in that** upon addressing, the session number (CID1-CID3) on the data carrier (100) is linked additionally with the additional selection information item associated with the application (10A-40A, 10B-30B, 10C-30C, 40D).

19. The method according to any of claims 1 to 18, **characterized in that** the data carrier (100) recognizes by a response of the reading device (200) to communication-ready signals emitted by the data carrier (100) whether the reading device (200) is set up to resolve a collision between a plurality of applications (10, 20, 30).

20. The method according to any of claims 1 to 19, **characterized in that** the reading device (200) communicates with a plurality of the at least two applications (10, 20, 30) in parallel.

21. The method according to any of claims 1 to 20, **characterized in that** the reading device (200) interprets the identification numbers (UID1-UIDn) as identification numbers of different data carriers.

22. The method according to claim 21 with claim 2, **characterized in that** the data carrier (100) generates the additional selection information as a virtual sector assignment (FS1-FS4) and the reading device (200) interprets the additional selection information as a sector assignment (FS1-FS4) of a memory area of one of the different data carriers (MA-MD), whereby the different data carriers (MA-MD) may be emulated data carriers (MA-MD).

23. A contactlessly communicating portable data carrier (100), comprising at least two applications (10, 20, 30) stored thereon and a communication device (70) for controlling communication between a reading device (200) and the at least two applications (10, 20, 30), wherein the communication device (70) is set up to generate communication-ready signals to the reading device (200) which in each case indicate to the reading device (200) a communication readiness for one of the applications (10, 20, 30) and comprise an identification number assigned to the corresponding communication-ready application (10, 20, 30),
**characterized in that** the communication device (70) is set up to generate communication-ready signals to the reading device (200) which in each case indicate to the reading device a communication readiness of each application (10A-40A; 10B-30B; 10C-30C, 40D) of a group (G1; G2; G3) of applications (10A-40A; 10B-30B; 10C-30C, 40D) comprising said application, and comprise an identification number (UID1; UID2; UID3) assigned to each of the applications (10A-40A; 10-30B; 10C-30C, 40D) of the group (G1; G2; G3).

24. The data carrier according to claim 23, **characterized in that** the communication device (70) is set up to assign additional selection information to each of the applications (10A-40A; 10B-30B; 10C-30C, 40D) of the group (G1; G2; G3).

25. The data carrier (100) according to any of claims 22 to 24, **characterized in that** the communication device (70) is set up to generate the communication-ready signals as response signals to search signals received from a reading device (200).

26. The data carrier (100) according to any of claims 22 to 25, **characterized by** a toggling device (50) which is set up to toggle between the applications (10, 20, 30) of the data carrier (100) for communication of the applications (10, 20, 30) with a reading device (200).

27. The data carrier (100) according to claim 26, **characterized in that** the toggling device (50) is set up to toggle between the applications (10, 20, 30) of the data carrier (100) by means of branching or context switching.

28. The data carrier (100) according to any of claims 22 to 27, **characterized in that** the communication device (70) is set up to establish the communication between a reading device (200) and an application (10, 20, 30) addressed by the reading device (200) via a session number (CID1-CIDn).

29. The data carrier (100) according to claim 28, **characterized in that** the communication device (70) is set up to link, upon addressing of the application (10, 20,30), the session number (CID1-CIDn) with the identification number (UID1-UIDn) assigned to the application (10, 20, 30).

30. The data carrier (100) according to claim 29 with claim 24, **characterized in that** the communication device (70) is set up to link, upon addressing of the application (10A-40A, 10B-30B, 10C-30C, 40D), the session number (CID1-CID3) additionally with the additional selection information assigned to the application (10A-40A, 10B-30B, 10C-30C, 40D).

31. The data carrier (100) according to any of claims 22 to 30, **characterized in that** the communication device (70) is set up to determine those applications (10, 20, 30) among the at least two applications (10, 20, 30) that are ready for communication with a reading device (200).

32. The data carrier (100) according to claim 31, **characterized in that** the communication device (70) is set up to emit communication-ready signals for one or more of the at least two applications (10, 20, 30) that are ready for communication with a reading device (200) and not yet communicating with a reading device (200) while the communication with one or more others of the at least two applications (10, 20, 30) is not yet completed.

33. The data carrier (100) according to claim 31 or 32, **characterized in that** the communication device (70) is set up to emit communication-ready signals for one or more of the at least two applications (10, 20, 30) that are ready for communication with a reading device (200) and not yet communicating with a reading device (200) after one or more others of the at least two applications (10, 20, 30) have been suspended after completion of communication with a reading device (200).

34. The data carrier (100) according to any of claims 22 to 33, **characterized in that** the communication device (70) is set up to inform the reading device (200) via collision signals simulating a collision between a plurality of applications that one or more of the at least two applications (10, 20, 30) located on the data carrier (100) that have not yet been selected for further communication by the reading device (200) are present.

35. The data carrier (100) according to any of claims 22 to 34, **characterized in that** the communication device (70) is set up to store information in a nonvolatile memory of the data carrier (100) about which of the at least two applications (10, 20, 30) last communicated with a reading device (200).

36. The data carrier (100) according to claim 35, **characterized in that** the communication device (70) is set up to emit, upon new contacting of a reading device (200) with the data carrier (100), a communication-ready signal first for one of the at least two applications (10, 20, 30) that is different from the application (10, 20, 30) designated by the stored information.

37. The data carrier (100) according to any of claims 22 to 36, **characterized in that** the communication device (70) is set up to recognize by a response of a reading device (200) to communication-ready signals emitted by the communication device (70) whether the reading device (200) is set up to resolve collisions between a plurality of applications.

38. The data carrier (100) according to any of claims 22 to 37, **characterized in that** the data carrier (100) is configured as a contactlessly communicating chip card, contactlessly communicating label, contactlessly communicating identification document or as a (U)SIM mobile communication card.

39. The data carrier (100) according to any of claims 22 to 38, **characterized in that** the data carrier (100) has a dual interface and can be operated both contactlessly and with contact.

40. The data carrier (100) according to any of claims 22 to 37, **characterized in that** the data carrier (100) is configured as a security module in a device comprising communication means for contactless communication, the security module having software means for communicate contactlessly via the communication means of the device.

41. The data carrier (100) according to any of claims 22 to 40, **characterized by** a memory (60) which is divided into sectors (S1-S11), each of the sectors (S1-S11) having no more than one of the at least two applications (10A-40A, 10B-30B, 10C-30C, 40D) stored therein in each case.

42. The data carrier (100) according to claim 41 with claim 24, **characterized in that** the communication device (70) is set up to assign (FS1-FS4) the at least two applications (10A-40A, 10B-30B, 10C-30C, 40D) the additional selection information in the form of a virtual sector assignment and to generate communication-ready signals for the groups (G1; G2; G3) of applications, the groups (G1; G2; G3) in each case comprising applications (10A-40A; 10B-30B; 10C-30C, 40D) with pairwise different virtual sector assignments (FS1-FS4).

43. The data carrier (100) according to claim 41 or 42, **characterized in that** each of the sectors (S1-S11) is access-protected separately for access by a reading device (200) to applications (10A-40A, 10B-30B, 10C-30C, 40D) stored in said sectors.

44. The data carrier (100) according to any of claims 22 to 37, **characterized in that** the data carrier (100) is configured as an electronic device, in particular as a mobile terminal, with a contactless interface for communication with a reading device (200) and with a plurality of memories, each of the memories having no more than one of the at least two applications (10, 20, 30) stored therein in each case.

45. The data carrier (100) according to claim 44, **characterized in that** the contactless interface is configured as an NFC interface and the data carrier (100) is set up to be operated in the passive mode for communication with a reading device (200).

46. The data carrier (100) according to claim 44 or 45, **characterized in that** the memories are formed on chip cards, in particular (U)SIM mobile communication cards, secure digital memory cards or EMV payment cards, integrated into the data carrier (100).

## Revendications

1. Procédé de communication sans contact d'un appareil de lecture (200) avec au moins deux applications (10, 20, 30) disponibles pour la communication se trouvant sur un support de données (100) portable, comprenant les étapes :
génération d'un premier signal de disponibilité pour la communication à l'appareil de lecture (200) pour une première des au moins deux applications (10, 20, 30), le signal de disponibilité pour la communication comprenant un premier numéro d'identification (UID1) qui est affecté à la première des au moins deux applications (10, 20, 30) et indique à l'appareil de lecture (200) la disponibilité pour la communication de cette première application, et
génération d'un deuxième signal de disponibilité pour la communication à l'appareil de lecture (200) pour une deuxième des au moins deux applications (10, 20, 30), le deuxième signal de disponibilité pour la communication comprenant un deuxième numéro d'identification (UID2) qui est différent du premier numéro d'identification (UID1) et est affecté à cette deuxième application et indique à l'appareil de lecture (200) la disponibilité pour la communication de cette deuxième application,
**caractérisé en ce que** le premier signal de disponibilité pour la communication est généré pour un premier groupe (G1) d'applications (10A-40A) comprenant la première application et que le premier numéro d'identification (UID1) est affecté à chacune des applications (10A-40A) dans le premier groupe (G1), et que le deuxième signal de disponibilité pour la communication est généré pour un deuxième groupe (G2) d'applications (10B-30B) comprenant la deuxième application et que le deuxième numéro d'identification (UID2) est affecté à chacune des applications (10B-30B) dans le deuxième groupe (G2), cependant que le premier signal de disponibilité pour la communication indique à l'appareil de lecture (200) la disponibilité pour la communication de chacune des applications (10A-40A) du premier groupe (G1) et que le deuxième signal de disponibilité pour la communication indique à l'appareil de lecture (200) la disponibilité pour la communication de chacune des applications (10B-30B) du deuxième groupe (G2).

2. Procédé selon la revendication 1, cependant que, à chacune des applications (10A-40A) du premier groupe (G1) et/ou à chacune des applications (10B-30B) du deuxième groupe (G2), respectivement une information additionnelle de sélection est affectée.

3. Procédé selon une des revendications, 1 ou 2, **caractérisé en ce que** l'appareil de lecture (200) émet des signaux de recherche, les signaux générés pour les applications (10, 20, 30) étant des signaux de réponse aux signaux de recherche.

4. Procédé selon une des revendications de 1 à 3, **caractérisé par** l'étape additionnelle de la commutation entre les applications (10, 20, 30) pour la communication des applications (10, 20, 30) avec un appareil de lecture (200).

5. Procédé selon la revendication 4, **caractérisé en ce que** la commutation a lieu par ramification ou par changement de contexte.

6. Procédé selon une des revendications de 1 à 5, **caractérisé en ce que** l'appareil de lecture (200) sélectionne pour la communication subséquente une ou plusieurs des au moins deux applications (10, 20, 30) par l'intermédiaire des numéros d'identification (UID1-UIDn) affectés aux applications (10, 20, 30).

7. Procédé selon la revendication 6 en corrélation avec la revendication 2, **caractérisé en ce que** l'appareil de lecture (200) sélectionne pour la communication subséquente une ou plusieurs des au moins deux applications (10A-40A, 10B-30B, 10C-30C, 40D) par l'intermédiaire des numéros d'identification (UID1-UID3) affectés aux applications (10A-40A, 10B-30B, 10C-30C, 40D) et par l'intermédiaire de l'information additionnelle de sélection affectée aux applications (10A-40A, 10B-30B, 10C-30C, 40D).

8. Procédé selon la revendication 6 ou 7, **caractérisé en ce que**, pour une ou plusieurs des au moins deux applications (10, 20, 30) qui n'ont pas encore été sélectionnées par l'appareil de lecture (200) pour la communication subséquente, le signal de disponibilité pour la communication est généré pendant que la communication avec une ou plusieurs autres des au moins deux applications (10, 20, 30) qui ont été sélectionnées par l'appareil de lecture (200) pour la communication subséquente n'est pas encore achevée.

9. Procédé selon une des revendications de 6 à 8, **caractérisé en ce que**, pour une ou plusieurs des au moins deux applications (10, 20, 30) qui n'ont pas encore été sélectionnées par l'appareil de lecture (200) pour la communication subséquente, le signal de disponibilité pour la communication est généré après qu'une ou plusieurs autres des au moins deux applications (10, 20, 30) ont été suspendues après l'achèvement de la communication avec l'appareil de lecture (200).

10. Procédé selon une des revendications de 6 à 9, **caractérisé en ce que** le support de données (100) fait savoir à l'appareil de lecture (200), au moyen de signaux de collision, qu'il y a une ou plusieurs des au moins deux applications (10, 20, 30) qui n'ont pas encore été sélectionnées par l'appareil de lecture (200) pour la communication subséquente, ce qui a lieu **en ce que** des signaux sont émis, lesquels simulent une collision entre une pluralité d'applications (10, 20, 30).

11. Procédé selon une des revendications de 6 à 9, **caractérisé en ce que** le support de données (100) fait savoir à l'appareil de lecture (200), au moyen d'une occupation d'un ou de plusieurs créneaux temporels, qu'il y a une ou plusieurs des au moins deux applications (10, 20, 30) qui n'ont pas encore été sélectionnées par l'appareil de lecture (200) pour la communication subséquente.

12. Procédé selon une des revendications de 6 à 11, **caractérisé par** l'étape additionnelle de la mémorisation, dans une mémoire non volatile du support de données (100), d'information indiquant laquelle des au moins deux applications (10, 20, 30) a été en dernier lieu sélectionnée par l'appareil de lecture (200) pour la communication subséquente.

13. Procédé selon une des revendications de 6 à 11, **caractérisé par** l'étape additionnelle de la mémorisation, dans une mémoire non volatile du support de données (100), d'information indiquant laquelle des au moins deux applications (10, 20, 30) a déjà achevé une communication active avec l'appareil de lecture (200).

14. Procédé selon la revendication 12 ou 13, **caractérisé en ce que**, à une nouvelle communication de l'appareil de lecture (200) avec le support de données (100), tout d'abord pour une des au moins deux applications (10, 20, 30) différente de l'application (10, 20, 30) désignée par l'information mémorisée, un signal de disponibilité pour la communication est émis.

15. Procédé selon la revendication 12 ou 13, **caractérisé en ce que**, à une nouvelle communication de l'appareil de lecture (200) avec le support de données (100), tout d'abord pour l'application (10, 20, 30) avec laquelle il a été en dernier lieu communiqué, un signal de disponibilité pour la communication est émis.

16. Procédé selon une des revendications de 6 à 15, **caractérisé en ce que** l'appareil de lecture (200) adresse une application (10, 20, 30) sélectionnée pour la communication subséquente par l'intermédiaire d'un numéro de session (CID1-CIDn) attribué dynamiquement.

17. Procédé selon la revendication 16, **caractérisé en ce que**, lors de l'adressage, le numéro de session (CID1-CIDn) sur le support de données (100) est lié au numéro d'identification (UID1-UIDn) affecté à l'application (10, 20, 30).

18. Procédé selon la revendication 17 en corrélation avec la revendication 2, **caractérisé en ce que**, lors de l'adressage, le numéro de session (CID1-CID3) sur le support de données (100) est lié additionnellement avec l'information additionnelle de sélection affectée à l'application (10A-40A, 10B-30B, 10C-30C, 40D).

19. Procédé selon une des revendications de 1 à 18, **caractérisé en ce que** le support de données (100) reconnaît au moyen d'une réponse de l'appareil de lecture (200) à des signaux de disponibilité pour la communication émis par le support de données (100) si l'appareil de lecture (200) est configuré pour déclencher une collision entre une pluralité d'applications (10, 20, 30).

20. Procédé selon une des revendications de 1 à 19, **caractérisé en ce que** l'appareil de lecture (200) communique parallèlement avec plusieurs des au moins deux applications (10, 20, 30).

21. Procédé selon une des revendications de 1 à 20, **caractérisé en ce que** l'appareil de lecture (200) interprète les numéros d'identification (UID1-UIDn) en tant que numéros d'identification de différents supports de données.

22. Procédé selon la revendication 21 en corrélation avec la revendication 2, **caractérisé en ce que** le support de données (100) génère l'information additionnelle de sélection en tant qu'affectation de secteur (FS1-FS4) virtuelle et que l'appareil de lecture (200) interprète l'information additionnelle de sélection en tant qu'affectation de secteur (FS1-FS4) d'une zone mémoire d'un des différents supports de données (MA-MD), les différents supports de données (MA-MD) pouvant être des supports de données (MA-MD) émulés.

23. Support de données (100) portable communiquant sans contact, comprenant au moins deux applications (10, 20, 30) y étant mémorisées et un dispositif de communication (70) destiné à la commande d'une communication entre un appareil de lecture (200) et les au moins deux applications (10, 20, 30), le dispositif de communication (70) étant configuré pour générer des signaux de disponibilité pour la communication à l'appareil de lecture (200), lesquels indiquent respectivement à l'appareil de lecture (200) une disponibilité pour la communication pour une des applications (10, 20, 30) et comprend un numéro d'identification affecté à l'application (10, 20, 30) correspondante disponible pour la communication,
**caractérisé en ce que** le dispositif de communication (70) est configuré pour générer des signaux de disponibilité pour la communication à l'appareil de lecture (200), lesquels indiquent respectivement à l'appareil de lecture une disponibilité pour la communication de chaque application (10A-40A; 10B-30B; 10C-30C, 40D) d'un groupe (G1; G2; G3) d'applications (10A-40A; 10B-30B; 10C-30C, 40D) comprenant la une application et comprennent un numéro d'identification (UID1; UID2; UID3) affecté à chacune des applications (10A-40A; 10-30B; 10C-30C, 40D) du groupe (G1; G2; G3).

24. Procédé selon la revendication 23, **caractérisé en ce que** le dispositif de communication (70) est configuré pour, à chacune des applications (10A-40A; 10B-30B; 10C-30C, 40D) du groupe (G1; G2; G3), affecter respectivement une information additionnelle de sélection.

25. Support de données (100) selon une des revendications de 22 à 24, **caractérisé en ce que** le dispositif de communication (70) est configuré pour générer les signaux de disponibilité pour la communication en tant que signaux de réponse à des signaux de recherche reçus par un appareil de lecture (200).

26. Support de données (100) selon une des revendications de 22 à 25, **caractérisé par** un dispositif de commutation (50) configuré pour commuter entre les applications (10, 20, 30) du support de données (100) pour la communication des applications (10, 20, 30) avec un appareil de lecture (200).

27. Support de données (100) selon la revendication 26, **caractérisé en ce que** le dispositif de commutation (50) est configuré pour commuter entre les applications (10, 20, 30) du support de données (100) par ramification ou par changement de contexte.

28. Support de données (100) selon une des revendications de 22 à 27, **caractérisé en ce que** le dispositif de communication (70) est configuré pour établir la communication entre un appareil de lecture (200) et une application (10, 20, 30) adressée par l'appareil de lecture (200) par l'intermédiaire d'un numéro de session (CID1-CIDn).

29. Support de données (100) selon la revendication 28, **caractérisé en ce que** le dispositif de communication (70) est configuré pour, lors de l'adressage de l'application (10, 20, 30), lier le numéro de session (CID1-CIDn) au numéro d'identification (UID1-UIDn) affecté à l'application (10, 20, 30).

30. Support de données (100) selon la revendication 29 en corrélation avec la revendication 24, **caractérisé en ce que** le dispositif de communication (70) est configuré pour, lors de l'adressage de l'application (10A-40A, 10B-30B, 10C-30C, 40D), lier le numéro de session (CID1-CID3) additionnellement avec l'information additionnelle de sélection affectée à l'application (10A-40A, 10B-30B, 10C-30C, 40D).

31. Support de données (100) selon une des revendications de 22 à 30, **caractérisé en ce que** le dispositif de communication (70) est configuré pour déterminer, parmi les au moins deux applications (10, 20, 30), les applications (10, 20, 30) disponibles pour la communication avec un appareil de lecture (200).

32. Support de données (100) selon la revendication 31, **caractérisé en ce que** le dispositif de communication (70) est configuré pour, pour une ou plusieurs des au moins deux applications (10, 20, 30) qui sont disponibles pour la communication avec un appareil de lecture (200) et ne communiquent pas encore avec un appareil de lecture (200), émettre des signaux de disponibilité pour la communication pendant que la communication avec une ou plusieurs autres des au moins deux applications (10, 20, 30) n'est pas encore achevée.

33. Support de données (100) selon la revendication 31 ou 32, **caractérisé en ce que** le dispositif de communication (70) est configuré pour, pour une ou plusieurs des au moins deux applications (10, 20, 30) qui sont disponibles pour la communication avec un appareil de lecture (200) et ne communiquent pas encore avec un appareil de lecture (200), émettre des signaux de disponibilité pour la communication après qu'une ou plusieurs autres des au moins deux applications (10, 20, 30) ont été suspendues après l'achèvement de la communication avec un appareil de lecture (200).

34. Support de données (100) selon une des revendications de 22 à 33, **caractérisé en ce que** le dispositif de communication (70) est configuré pour faire savoir à l'appareil de lecture (200), par l'intermédiaire de signaux de collision qui simulent une collision entre une pluralité d'applications, qu'il y a encore une ou plusieurs des au moins deux applications (10, 20, 30) se trouvant sur le support de données (100) qui n'ont pas encore été sélectionnées par l'appareil de lecture (200) pour la communication subséquente.

35. Support de données (100) selon une des revendications de 22 à 34, **caractérisé en ce que** le dispositif de communication (70) est configuré pour mémoriser dans une mémoire non volatile du support de données (100) des informations indiquant laquelle des au moins deux applications (10, 20, 30) a en dernier lieu communiqué avec un appareil de lecture (200).

36. Support de données (100) selon la revendication 35, **caractérisé en ce que** le dispositif de communication (70) est configuré pour, lors d'une nouvelle prise de contact d'un appareil de lecture (200) avec le support de données (100), tout d'abord pour une des au moins deux applications (10, 20, 30) différente de l'application (10, 20, 30) désignée par l'information mémorisée, émettre un signal de disponibilité pour la communication.

37. Support de données (100) selon une des revendications de 22 à 36, **caractérisé en ce que** le dispositif de communication (70) est configuré pour reconnaître au moyen d'une réponse d'un appareil de lecture (200) à des signaux de disponibilité pour la communication émis par le dispositif de communication (70) si l'appareil de lecture (200) est configuré pour déclencher des collisions entre une pluralité d'applications.

38. Support de données (100) selon une des revendications de 22 à 37, **caractérisé en ce que** le support de données (100) est réalisé sous forme de carte à puce communiquant sans contact, de label communiquant sans contact, de document d'identification communiquant sans contact, ou d'une carte de téléphonie mobile (U)SIM.

39. Support de données (100) selon une des revendications de 22 à 38, **caractérisé en ce que** le support de données (100) comporte une double interface et peut être exploitée non seulement sans contact, mais aussi avec contact.

40. Support de données (100) selon une des revendications de 22 à 37, **caractérisé en ce que** le support de données (100) est réalisé sous forme de module de sécurité dans un appareil comprenant des moyens de communication pour la communication sans contact, cependant que le module de sécurité dispose de moyens logiciels pour communiquer sans contact par l'intermédiaire des moyens de communication de l'appareil.

41. Support de données (100) selon une des revendications de 22 à 40, **caractérisé par** une mémoire (60) subdivisée en secteurs (S1-S11), cependant que, dans chacun des secteurs (S1-S11), respectivement au maximum une des au moins deux applications ((10A-40A, 10B-30B, 10C-30C, 40D) est mémorisée.

42. Support de données (100) selon la revendication 41 en corrélation avec la revendication 24, **caractérisé en ce que** le dispositif de communication (70) est configuré pour affecter aux au moins deux applications ((10A-40A, 10B-30B, 10C-30C, 40D) l'information additionnelle de sélection sous forme d'une affectation de secteur (FS1-FS4) virtuelle et pour générer des signaux de disponibilité pour la communication pour les groupes (G1; G2; G3) d'applications, cependant que les groupes (G1; G2; G3) comprennent respectivement des applications (10A-40A; 10B-30B; 10C-30C, 40D) ayant des affectations de secteurs (FS1-FS4) virtuelles différentes par paires.

43. Support de données (100) selon la revendication 41 ou 42, **caractérisé en ce que** chacun des secteurs (S1-S11) est, pour un accès par un appareil de lecture (200) à des applications (10A-40A, 10B-30B, 10C-30C, 40D) y étant mémorisées, séparément à accès protégé.

44. Support de données (100) selon une des revendications de 22 à 37, **caractérisé en ce que** le support de données (100) est réalisé sous forme d'appareil électronique, en particulier de terminal de téléphonie mobile, comprenant une interface sans contact pour la communication avec un appareil de lecture (200) et comprenant une pluralité de mémoires, cependant que, dans chacune des mémoires, respectivement au maximum une des au moins deux applications ((10, 20, 30) est mémorisée.

45. Support de données (100) selon la revendication 44, **caractérisé en ce que** l'interface sans contact est réalisée sous forme d'interface NFC et que le support de données (100) est configuré pour être exploité en mode passif pour la communication avec un appareil de lecture (200).

46. Support de données (100) selon la revendication 44 ou 45, **caractérisé en ce que** les mémoires sont réalisées sur des cartes à puce intégrées dans le support de données (100), en particulier sur des cartes de téléphonie mobile (U)SIM, des cartes mémoire numériques sécurisées ou des cartes de paiement EMV.
